(19) Europäisches Patentamt
European Patent Office
Office européen des brevets

(11) **EP 3 262 767 B1**

(12) **EUROPEAN PATENT SPECIFICATION**

(45) Date of publication and mention
of the grant of the patent:
**25.06.2025 Bulletin 2025/26**

(21) Application number: **16756179.4**

(22) Date of filing: **23.02.2016**

(51) International Patent Classification (IPC):
**H04B 7/06** (2006.01)  **H04B 7/04** (2017.01)

(52) Cooperative Patent Classification (CPC):
**H04W 56/001; H04B 7/0452**

(86) International application number:
**PCT/US2016/019117**

(87) International publication number:
**WO 2016/137984 (01.09.2016 Gazette 2016/35)**

(54) **CYCLIC SHIFT DIVERSITY IN WIRELESS COMMUNICATIONS**

ZYKLISCHE VERSCHIEBUNGSDIVERSITÄT IN DER DRAHTLOSEN KOMMUNIKATION

DIVERSITÉ À DÉCALAGE CYCLIQUE DANS DES COMMUNICATIONS SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2015 US 201562126290 P
24.03.2015 US 201562137611 P
26.12.2015 US 201514757824**

(43) Date of publication of application:
**03.01.2018 Bulletin 2018/01**

(73) Proprietor: **Intel Corporation
Santa Clara, CA 95054 (US)**

(72) Inventors:
• **LI, Qinghua
San Ramon, CA 94582 (US)**
• **HUANG, Po-Kai
San Ramon, CA 94582 (US)**

• **STACEY, Robert
Portland, OR 97210 (US)**
• **CHEN, Xiaogang
Portland, OR 97229 (US)**
• **ZHU, Yuan
Beijing 100012 (CN)**

(74) Representative: **HGF
HGF Limited
Fountain Precinct
Balm Green
Sheffield S1 2JA (GB)**

(56) References cited:
**EP-A1- 3 202 055     WO-A1-2005/041441
US-A1- 2011 305 194     US-A1- 2011 305 194
US-A1- 2012 099 668     US-A1- 2012 177 019
US-A1- 2012 177 019     US-A1- 2012 236 961
US-A1- 2015 023 335**

# EP 3 262 767 B1

## Description

BACKGROUND

Some wireless communications can have common content that can be transmitted nearly simultaneously from multiple user devices or other types of devices that can transmit wireless signal. Therefore, the content can superpose in frequency and/or time, which can result in communication artifacts originating from multipath fading, for example.

US 2015/0023335 relates to a physical layer design for uplink (UL) multiuser multiple-input multiple-output (MU-MIMO) in wireless local area network (WLAN) systems.

US 2012/0177019 describes cyclic shift delay techniques for WLAN multi-radio devices.

BRIEF DESCRIPTION OF THE DRAWINGS

The accompanying drawings form an integral part of the disclosure and are incorporated into the present specification. The drawings illustrate example embodiments of the disclosure and, in conjunction with the description and claims, serve to explain at least in part various principles, features, or aspects of the disclosure. Some embodiments of the disclosure are described more fully below with reference to the accompanying drawings. However, various aspects of the disclosure can be implemented in many different forms and should not be construed as limited to the implementations set forth herein. Like numbers refer to like elements throughout.

FIG. 1 illustrates an example of an operational environment for wireless communication in accordance with one or more embodiments of the disclosure.

FIGS. 2-3 illustrate examples of wireless transmissions including common transmission content across different communication devices in accordance with one or more embodiments of this disclosure. In FIG. 2 the common content includes a common legacy preamble and FIG. 3 includes common clear to send (CTS) transmission.

**FIG. 4** illustrates an example of the stabilization of total received power due to cyclic shift diversity (CSD) in accordance with one or more embodiments of the disclosure.

**FIGS. 5-6** present examples of wireless transmissions in accordance with one or more embodiments of the disclosure.

**FIG. 7A** illustrates examples of allocation of CSD values for different communication devices having different numbers of antennas in accordance with one or more embodiments of the disclosure.

**FIG. 7B** illustrates another example of allocation of CSD values for different communication devices having different numbers of antennas in accordance with one or more embodiments of the disclosure.

**FIG. 8A** illustrates yet another example of allocation of CSD values for different communication devices having different numbers of antennas in accordance with one or more embodiments of this disclosure.

**FIG. 8B** illustrates still another example of allocation of CSD values for different communication devices having different numbers of antennas in accordance with one or more embodiments of this disclosure.

**FIG. 9** illustrates an example of a network environment in accordance with one or more example embodiments of the disclosure.

**FIGS. 10-11** illustrate an example model for applying orthogonal codes to LTF sequences of different devices for each LTF symbol in accordance with one or more embodiments of the disclosure.

**FIG. 12** illustrates results of an example simulation of network performance using a pre-shifted LTF sequence and/or no CSD in accordance with one or more embodiments of the disclosure.

**FIG. 13** illustrates an example of application of CSD to an LTF sequence in accordance with one or more embodiments of the disclosure.

**FIG. 14** illustrates an example simulation of channel estimation performance using cyclic shift diversity for interference cancellation in accordance with one or more embodiments of the disclosure.

**FIG. 15** presents an example of a device for wireless communication in accordance with one or more embodiments of the disclosure.

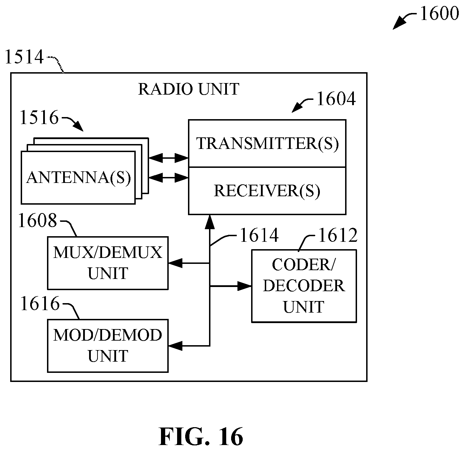

**FIG. 16** presents an example of a radio unit for wireless communication in accordance with one or more embodiments of the disclosure.

**FIG. 17** presents an example of a computational environment for wireless communication in accordance with one or more embodiments of the disclosure.

**FIG. 18** presents another example of a communication device for wireless communication in accordance with one or more embodiments of the disclosure.

**FIG. 19** presents an example method for wireless communication in accordance with one or more embodiments of the disclosure.

**FIG. 20** depicts an example method for utilizing a CSD-compatible LTF sequence in accordance with one or more embodiments of the disclosure.

DETAILED DESCRIPTION

The disclosure recognizes and addresses, in at least some aspects, the issue of wireless transmissions (or other type of communications) that have common content that superposes in frequency and/or time. Some embodiments of the disclosure apply cyclic shift diversity (CSD) to the uplink simultaneous transmission form different communication devices (e.g., a transmitter or a receiver). In addition, embodiments of the disclosure can enhance the reliability and/or resilience of wireless communications, such as uplink transmissions. With respect to multiuser CSD, the reliability of simultaneous L-SIG and/or simultaneous CTS transmissions also can be enhanced for indoor environments. With further reference to multiuser CSD, in some implementations, the improvements afforded by some embodiments of the disclosure can be comparable to or exceed that provided by single-user CSD with multiple transmit antennas. More specifically, yet not exclusively, the disclosure provides devices, systems, techniques, and/or computer program products for cyclic shift diversity for the simultaneous wireless transmissions (e.g., uplink transmissions) from the antennas of multiple communication devices. While various embodiments of the disclosure are illustrated in connection with communication within a 20 MHz channel, it should be appreciated that the disclosure is not limited in that respect and other channel bandwidths (40 MHz, 80 MHz, 160 MHz or 80+80 MHz) are contemplated. Similarly, the disclosure is not limited with the respect to the number of communications devices included in MU transmissions, and the CSD features described herein can be implemented for any number of communication devices. Further, the features described herein in connection with CSD in wireless communications can be applied to communications according to any radio technology protocol, not just Wi-Fi protocols, such as those of the Institute of Electrical and Electronics Engineers (IEEE) 802.11 family of standards.

*Glossary.* -The following acronyms are utilized in the present specification and annexed drawings: AP: Access Point; CSD: Cyclic shift diversity; CTS: Clear to Send; DL: Downlink; HEW: High-Efficiency Wireless Local Area Network ID: Identification; L-STF: Legacy Short Training Field; L-LTF: Legacy Long Training Field; L-SIG: Legacy Signal Field; MAC: Media Access Control; MU: Multi-user; OFDM: Orthogonal Frequency Division Multiplexing; PAID: Partial Access ID; RTS: Ready to Send; STA: Station; and UL: Uplink.

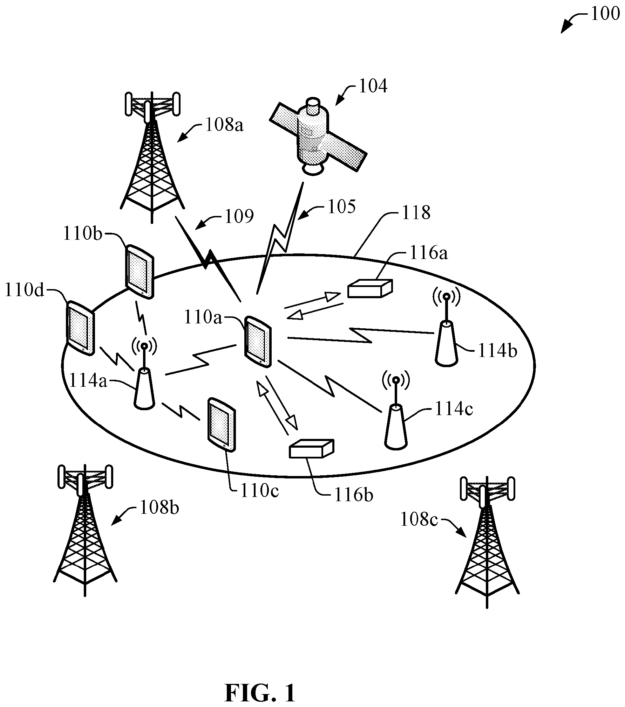

With reference to the drawings, **FIG. 1** presents a block diagram of an example operational environment 100 for wireless communication in accordance with at least some aspects of the disclosure. The operational environment 100 includes several telecommunication infrastructures and communication devices, which collectively can embody or otherwise constitute a telecommunication environment. More specifically, yet not exclusively, the telecommunication infrastructures can include a satellite system 104. As described herein, the satellite system 104 can be embodied in or can include a global navigation satellite system (GNSS), such as the Global Positioning System (GPS), Galileo, GLONASS (*Globalnaya navigatsionnaya sputnikovaya sistema),* BeiDou Navigation Satellite System (BDS), and/or the Quasi-Zenith Satellite System (QZSS). In addition, the telecommunication infrastructures can include a macro-cellular or large-cell system; which is represented with three base stations 108a-108c; a micro-cellular or small-cell system, which is represented with three access points (or low-power base stations) 114a-114c; and a sensor-based system-which can include proximity sensor(s), beacon device(s), pseudo-stationary device(s), and/or wearable device(s)-represented with functional elements 116a-116c. As illustrated, in one implementation, each of the transmitter(s), receiver(s), and/or transceiver(s) included in respective computing devices (such as telecommunication infrastructure) can be functionally coupled (e.g., communicatively or otherwise operationally coupled) with the wireless device 110a (also referred to as communication device 110a) via wireless link(s) in accordance with specific radio technology protocols (e.g., IEEE 802.11a, IEEE 802.11ax, etc.) in accordance with aspects of this disclosure. For another example, a base station (e.g., base station 108a) can be functionally coupled to the wireless devices 110a, 110b, 110c, and 110d via respective an upstream wireless link (UL) and a downstream link (DL) configured in accordance with a radio technology protocol for macro-cellular wireless communication (e.g., 3rd Generation Partnership Project (3GPP) Universal Mobile Telecommunication System (UMTS) or "3G," "3G"; 3GPP Long Term Evolution (LTE), or LTE); LTE Advanced (LTE-A)). For yet another example, an access point (e.g., access point 114a) can be functionally coupled to one or more of the wireless devices 110a, 110b, or 110c via a respective UL and DL configured in accordance with a radio technology protocol for small-cell wireless communication (e.g., femtocell protocols, Wi-Fi, and the like). For still another example, a beacon device (e.g., device 116a) can be functionally coupled to the wireless device 110a with a UL-only (ULO), a DL-only, or an UL and DL, each of such wireless links (represented with open-head arrows) can be configured in accordance with a radio technology protocol for point-to-point or short-range wireless communication (e.g., Zigbee, Bluetooth, or near field communication (NFC) standards, ultrasonic communication protocols, or the like).

In the operational environment 100, the small-cell system and/or the beacon devices can be contained in a confined area 118 that can include an indoor region (e.g., a commercial facility, such as a shopping mall) and/or a spatially-confined outdoor region (such as an open or semi-open parking lot or garage). The small-cell system and/or the beacon devices can provide wireless service to a device (e.g., wireless device 110a or 110b) within the confined area 118. For instance, the wireless device 110a can handover from macro-cellular wireless service to wireless service provided by the small-cell system present within the confined area 118. Similarly, in some scenarios, the macro-cellular system can provide wireless service to a device (e.g., the wireless device 110a) within the confined area 118.

In some embodiments, the wireless device 110a, as well as other communication devices (wireless or wireline) contemplated in the present disclosure, can include electronic devices having computational resources, including processing resources (e.g., processor(s)), memory resources (memory devices (also referred to as memory), and communication resources for exchange of information within the computing device and/or with other computing devices. Such resources can have different levels of architectural complexity depending on specific device functionality. Exchange of information among computing devices in accordance with aspects of the disclosure can be performed wirelessly as described herein, and thus, in one aspect, the wireless device 110a also can be referred to as wireless communication device 110a, wireless computing device 110a, communication device 110a, or computing device 110a interchangeably. The same nomenclature considerations apply to wireless device 110b and wireless device 110c. More generally, in the present disclosure, a communication device can be referred to as a computing device and, in some instances, the terminology "communication device" can be used interchangeably with the terminology "computing device," unless context clearly dictates that a distinction should be made. In addition, a communication device (e.g., communication device 110a or 110b or 110c) that operates according to HEW can utilize or leverage a physical layer convergence protocol (PLCP) and related PLCP protocol data units (PPDUs) in order to transmit and/or receive wireless communications. Example of the computing devices that can communicate wirelessly in accordance with aspects of the present disclosure can include desktop computers with wireless communication resources; mobile computers, such as tablet computers, smartphones, notebook computers, laptop computers with wireless communication resources, Ultrabook™ computers; gaming consoles, mobile telephones; blade computers; programmable logic controllers; near field communication devices; customer premises equipment with wireless communication resources, such as set-top boxes, wireless routers, wireless-enabled television sets, or the like; and so forth. The wireless communication resources can include radio units (also referred to as radios) having circuitry for processing of wireless signals, processor(s), memory device(s), and the like, where the radio, the processor(s), and the memory device(s) can be coupled via a bus architecture.

The computing devices included in the example operational environment 100, as well as other computing devices contemplated in the present disclosure, can implement or otherwise leverage the CSD aspects described herein. It should be appreciated that other functional elements (e.g., servers, routers, gateways, and the like) can be included in the operational environment 100. It should be appreciated that the cyclic shift diversity features of this disclosure can be implemented in any telecommunication environment including a wireline network (e.g., a cable network, an internet-protocol (IP) network, an industrial control network, any wide area network (WAN), a local area network (LAN), a personal area network (PAN), a sensor-based network, or the like); a wireless network (e.g., a cellular network (either small-cell network or macro-cell network), a wireless WAN (WWAN), a wireless LAN (WLAN), a wireless PAN (WPAN), a sensor-based network, a satellite network, or the like); a combination thereof; or the like.

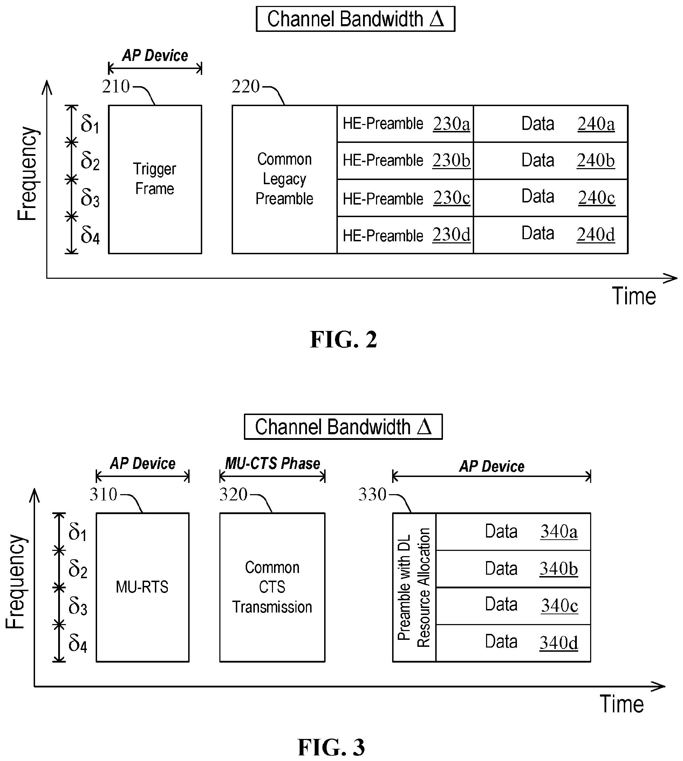

Some radio technology protocols for wireless communication can include signaling or other type of information that directs or otherwise permits multiple uplink (UL) communications from a group of communication devices, for example. More specifically, as an illustration, IEEE 802.11ax has defined a trigger frame to trigger multiple UL transmissions simultaneously or substantially simultaneously. In some embodiments, as illustrated in **FIG. 2,** such simultaneous UL transmissions may include common transmission content, such as a legacy preamble for an UL OFDMA communication. More specifically, in one example, four station devices (e.g., STA devices 110a-110d) can be allocated to respective subcarriers $\delta_1, \delta_2, \delta_3$, and $\delta_4$ within a channel having bandwidth $\Delta$ (e.g., 20 MHz). An AP device (e.g., AP device 114a) can transmit a trigger frame 210 to each of the station devices, where the trigger frame can include common content. Similarly, each of the four station devices can transmit a common legacy preamble 220 to the station devices respectively scheduled in the subcarriers $\delta_1$-$\delta_4$. Subsequently, as shown in **FIG. 2,** each of the four station devices can transmit content that is specific to a respective station device scheduled in one of the subcarriers $\delta_1$-$\delta_4$. As illustrated, a first device (e.g., STA device 110a) scheduled in subcarrier $\delta_1$ can transmit a HE-Preamble 230a. A second device (e.g., STA device 110b) scheduled in subcarrier $\delta_2$ can transmit a HE-Preamble 230b. A third device (e.g., STA device 110bc) scheduled in subcarrier $\delta_3$ can transmit a HE-Preamble 230c. A fourth device (e.g., STA device 110d) scheduled in subcarrier $\delta_4$ can transmit a HE-Preamble 230d. Subsequent to transmission of such preambles, the station devices can transmit, in the uplink, respective data 240a, data 240b, data 240c, and data 240c.

In addition or in other embodiments, as illustrated in **FIG. 3,** the simultaneous uplink transmission may include other common transmission content, such as a common CTS frame transmission. The common transmission content can be transmitted in response to other common content, such as multi-user (MU) CTS frame 310 transmitted, in the DL, by an AP device. The common transmission content can be embodied in or can include a common CTS transmission sent UL by station devices respectively allocated to subcarriers $\delta_1$-$\delta_4$. Further, the common CTS transmission can be utilized, for example, for DL data protection. It is noted that the common transmission content also can be utilized for other purposed beyond DL data protection. In response to completion of the MU-CTS phase, the AP device can transmit, in the DL, a preamble 330 with DL resource allocation, and can further transmit data 340a, data 34-0b, data 340c, and data 340d for respective station devices; e.g., a first device can receive at least a portion of the data 340a; a second device can receive at least a portion of the data 340b; a third device can receive at least a portion of the data 340c; and at least a fourth device can receive at least a portion of the data 340d. Although reference is made to a 20 MHz channel in connection with **FIGS. 2-3,**

the disclosure is not so limited and multiple simultaneous or nearly simultaneous UL communications within different channel bandwidth Δ are contemplated.

As illustrated, common transmission contents can superimpose on time and frequency over the air. Therefore, in one aspect, such transmissions can be viewed as simultaneous transmissions from the antenna(s) of different communication devices. In addition, physical layer spoofing is motioned into the DensiFi document for multiuser (MU) transmissions, such as uplink OFDMA and uplink MU-MIMO. The same legacy preamble can be sent simultaneously by different uplink user devices. In scenarios in which the user devices (also generally referred to as "users") are within small environment, such as in the same room, the received power of the legacy preamble can drop close to zero randomly. Without intending to be limited by theory and/or modeling, such a drop can be due to destructive fading among the user-devices' signals, whose multipath arrival times are about the same.

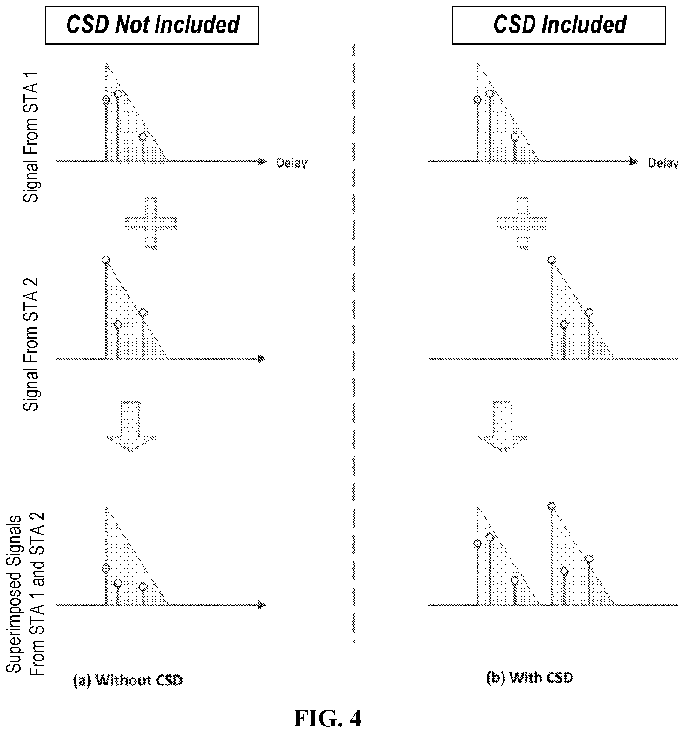

In one aspect, the similarity among the multipath arrival times can permit the signals carried by the multipaths to interact with each other, resulting in destructive fading randomly. In one example, IEEE 802.11n/ac can utilize cyclic shift diversity (CSD) for single-user transmissions with multiple transmit antennas. In one aspect, CSD can shift the arrival times of different antennas' signals in FFT domain (also referred to as "reciprocal domain" or "frequency domain") such that the total received power can approach the sum of the power received from each individual antenna. **FIG. 4** illustrates the stabilization of the total received power due to implementation of CSD in accordance with one or more embodiments of the disclosure. In one example, the minimum shift can be 50 ns, which essentially corresponds to a 50-foot propagation delay and one baseband sample (in FFT domain) for a 20 MHz channel. Therefore, since most of the indoor scenarios for uplink multiuser communications are within 50 feet, some embodiments of the disclosure add CSD to the uplink user devices (e.g., STA device 110a, STA device 110b, STA device 110c, STA device 110d, or the like) when the user devices transmit a common signal, such as legacy preamble and/or simultaneous CTS.

In some scenarios, from the perspective of antenna radiation pattern (such as MIMO transmission from multiple antennas on the same device), when the transmission content is the same there may be unintended beamforming, especially when the difference of propagation delay from multiple communication devices is small. Therefore, in one example, big voids in the coverage area may be present. As such, embodiments of the disclosure can mitigate or remove such voids via CSD in accordance with aspects described herein.

Some embodiments of the disclosure can apply CSD to the common content of simultaneous or substantially simultaneous uplink transmissions, such as L-STF, L-LTF, L-SIG, and simultaneous MAC frame (e.g., CTS frame). In some embodiments, CSD values can be signaled or otherwise communicated for multiple communication devices. In one embodiment, an access point (e.g., AP device 114a) can assign different CSD values to different users statically via management frame. In addition or in another embodiment, the AP can assign different CSD values to different users dynamically via trigger frame or scheduling frame or physical layer (PHY) header (e.g., HE-SIG-B). Further or in yet another embodiment, the CSD value can be signaled in the trigger frame 210, for example, for each triggered device or the scheduling frame for each transmission or PHY header. Further or in other embodiments, the number of antennas for each device can also be used to determine the CSD value. For example, a mobile station may report its number of transmit antennas to the AP device.

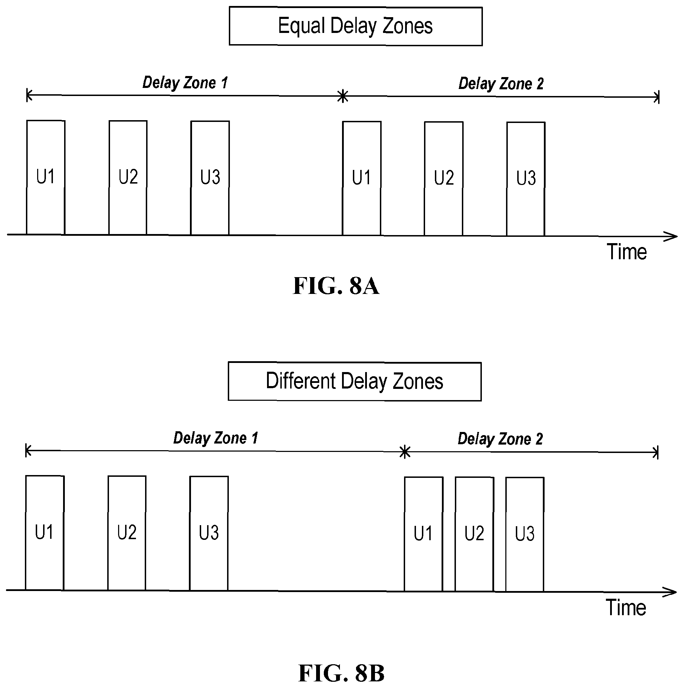

In some implementations, a table for applying CSD can be defined. Such a table can be included as part of the specification of the radio technology protocol for wireless communication, e.g., IEEE 802.11ax. In one example, the table can define the CSD for different number of user devices. More specifically, as an illustration, for a fixed number of user devices (e.g., $K$ stations, with $K$ a natural number greater than unity), the table can define the K CSD values for respective user device in a specific order. For instance: STA devices can obtain or otherwise acquire respective CSD values from the table based at least on a respective order of communication addresses (e.g., a MAC address, an IP address, a Station ID, or the like) listed in the trigger frame or scheduling frame or PHY header. In one example scenario in which the trigger frame 210 triggers STA devices with addressing STA1, STA2, and STA3, the STA1 can use the first CSD value from the table for three user devices. A table of the CSD may include CSD delay values $\delta t(i-1)$, expressed in ns, for example, for the $i$-th user device. Here, $\delta t$ can be a defined or otherwise configurable delay value. As such, the CSD increment may be a constant for a given $K$. In another example scenario, the table can be defined based on the number of antennas of each user device. For example, the table can determine the CSD of the first antennas based on the user devices in a specific window. In addition, the user devices can spread the CSD of the remaining antennas across the remainder of the window. **FIGS. 8A-8B** illustrate such a determination of CSD values for various antennas.

In some embodiments, a user device can determine or otherwise configure a CSD value for UL transmissions in response to or otherwise triggered by an UL MU transmission, for example. In one example, L-LTF, L-SIG, and MAC content of a frame can use the same CSD value. In addition or in another example, L-STF can use the same or a different CSD value as the one for L-LTF. In some implementations, if the triggered STA has multiple antennas, then the triggered STA can combine the CSD for UL MU transmission with the CSD for multi-antenna transmission to determine the CSD of transmission at each antenna. For example, a summation may suffice. For another example, if there is a limit for maximum CSD value, say $T_{max}$, then modulo operation can be applied in order to determine or otherwise configure a CSD value for the STA. For yet another example, the triggered STA can opt or otherwise determine to transmit using only one or two CSD values for all its antennas. In addition or in other implementations, if the triggered STA has multiple antennas, then the triggered STA device can adopt the signaling for the CSD of each antenna that may be defined by a table (or other type of information structure) as described herein and/or signaled by an AP device (e.g., AP device 114a).

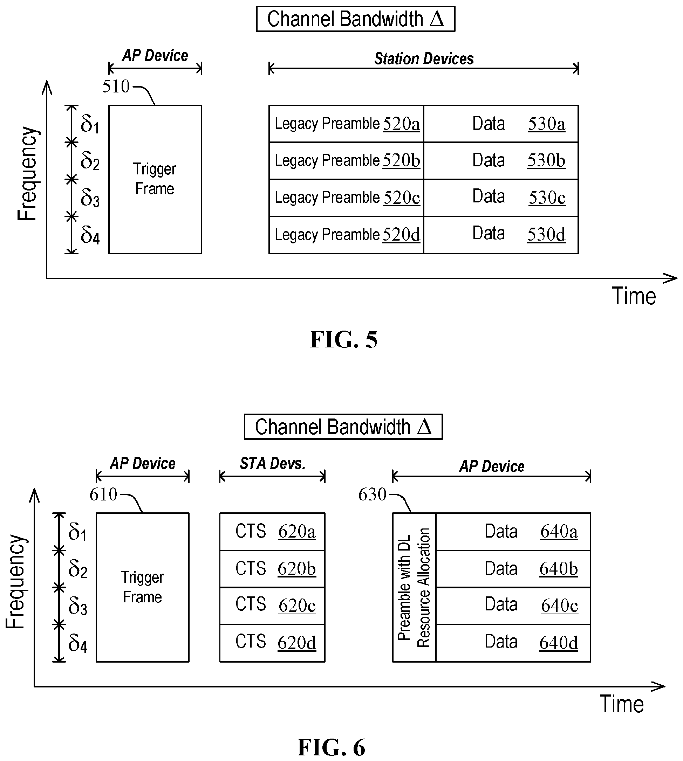

In some operational scenarios, UL simultaneous transmission can occur across the entire channel bandwidth $\Delta$ (e.g., 20 MHz channel bandwidth). In one of such scenarios, STA devices can respond with L-SIG in specific 20 MHz subcarriers. Typically, STA devices have to transmit on the primary 20 MHz channel, for example. Yet, since uplink OFDMA can be scheduled by a trigger frame (e.g., trigger frame 210, trigger frame 510, or trigger frame 610) and STA devices can transmit data on respectively scheduled subcarrier, STA devices may not need to transmit L-SIG on the entire 20 MHz channel. **FIG. 5** illustrates UL transmission of L-SIG in different channel subcarrier $\delta_1$, $\delta_2$, $\delta_3$, and $\delta_4$ in accordance with one or more embodiments of the disclosure. As illustrated, L-SIG is represented as legacy preamble 520a, legacy preamble 520b, legacy preamble 520c, and legacy preamble 520d. As described herein, although communication within a 20 MHz channel is illustrated, it should be appreciated that the disclosure is not so limited and other channel bandwidths (40 MHz, 80 MHz, 160 MHz or 80+80 MHz, or the like) are contemplated. Similarly, the disclosure is not limited with the respect to the number of communications devices (e.g., four STA devices), and the CSD elements described herein can be implemented for more than four stations or less than four stations.

In one scenario, STAs can transmit the legacy preamble on the 20MHz channel, where the UL data is to be transmitted. In such a scenario, a table for CSD values can be determined by or otherwise configured according to the maximum number of STAs in a 20MHz channel. In addition or in other scenarios, STAs can transmit the legacy preamble on every 20MHz channel occupied by UL OFDMA transmission. In such a scenario, the table for CSD can be determined by or otherwise configured according to the total or maximum number of STAs in an uplink OFDMA transmission.

Similar to the transmission of legacy preambles described hereinbefore, various implementations can be afforded for simultaneous CTS frame transmissions in a channel having bandwidth $\Delta$, as illustrated in **FIG. 6.** In one scenario, STA devices can transmit the CTS on the channel in which the DL data can be transmitted. For instance, four STA devices respective allocated to subcarriers $\delta_1$, $\delta_2$, $\delta_3$, and $\delta_4$ can transmit, respectively, CTS 620a, CTS 620b, CTS 620c, and CTS 620d. In such a scenario, a table for CSD can be determined by or otherwise configured according to the total or maximum number of STAs scheduled in a 20MHz channel. In addition or in another scenario, STAs can transmit the legacy preamble on every 20MHz channel occupied by UL OFDMA transmission. As such, for example, a table for CSD can be determined by or otherwise configured according to the total or maximum number of STAs in a downlink OFDMA transmission.

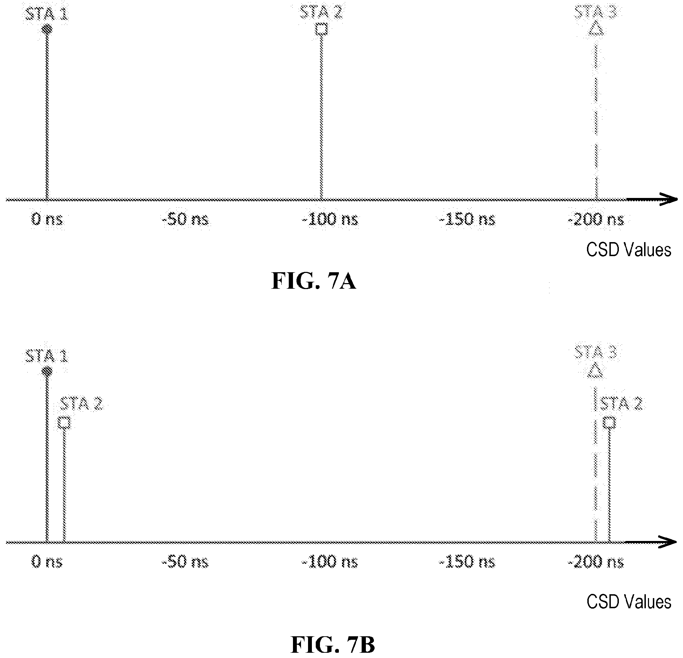

Some embodiments of the disclosure permit maximizing or otherwise leveraging legacy reuse and reducing implementation complexity by providing schemes for allocating CSD values to different user devices. **FIGS. 7A-7B** illustrate examples of allocation of CSD values for different communication devices (e.g., a first STA device STA 1, a second STA device STA 2, and a third STA device STA 3), each having different numbers of antennas in accordance with this disclosure. In one aspect, the design principle of such an allocation is to maximize the CSD value span of the stations being allocated or otherwise assigned a CSD value. Since the CSD value span of a single station can be maximal in some legacy radio technology protocols (e.g., IEEE 802.11 n/ac) if the station has multiple antennas, embodiments of the disclosure can provide maximal or otherwise satisfactory span of CSD values for stations having a single transmit antenna. It should be appreciated that, in some embodiments, an AP or a mobile station may not know the number of transmit antennas of another communication device.

In some embodiments, an uplink station addressed by an AP can first learn that it needs to send the same signal simultaneously with other stations. Specifically, yet not exclusively, the uplink station can learns its place in a station list in which stations can send the same signal simultaneously on the same frequency band or sub-band. As an illustration, after decoding the AP's trigger frame and/or scheduling frame, the uplink station can determine its partial access ID (PAID) in the 3$^{rd}$ position in the uplink schedule for a some band or subband. If the UL station has multiple transmit antennas for CSD, the UL station can utilize the CSD values defined in 802.11n/ac for single station transmission, where such values can range from about 0 ns to about -200 ns. In the alternative, if the UL station has a single transmit antenna, the UL station needs to select or otherwise determine a CSD value according to the station's position in the schedule and/or according to the total number of stations transmitting simultaneously for the band or sub-band.

**FIG. 7A** illustrates an example in which three uplink stations (STA 1, which can be embodied in device 110a; STA 2, which can be embodied in device 110b; and STA 3, which can be embodied in device 110c) need to send a common signal (e.g., CTS or legacy preamble) on the same band or sub-band. All such UL stations have a single antenna. As such, in one example, the UL stations can utilize the CSD values defined within IEEE 802.11n/ac for single user, 3-antenna CSD. Specifically, yet not exclusively, STA 1 can adopt 0 ns, STA 2 can adopt -100 ns, and STA 3 can adopt -200 ns.

**FIG. 7B** illustrates an example in which STA 2 has two antennas and STAs 1 and 3 each have one antenna. In one example, by having two antennas, STA 2 can utilize the CSD values defined in IEEE 802.11 n/ac-e.g., 0 ns for a first antenna and -200 ns for a second antenna-and can dismiss its position in the schedule for purposes of adopting a CSD value. Further, in such an example, STAs 1 and 3 can adopt the CSD values defined for a 3-antenna device in IEEE 802.11n/ac according to their positions in the schedule- e.g., the 1st and 3$^{rd}$ places. Therefore, the CSD values of STAs 1 and 3 can be 0 ns and - 200 ns, respectively.

In some embodiments, an uplink station may not have access to its position in a schedule and/or to the total number of stations that can send the same signal simultaneously in the same band or sub-band. In such embodiments, in one example, this disclosure contemplates that an uplink station having multiple antennas can adopt the same CSD values defined in IEEE 802.1 1n/ac for single user transmission. In addition, another uplink station having a single antenna can randomly select or otherwise determined a CSD value from a table with different CSD values. Such a table can be defined in the standard for the radio technology protocol utilized for wireless communication, or it can be specified by an access point that can communicate with such an uplink station. For instance, the table defined for an 8-antenna station in IEEE 802.11ac/n may be reused in some embodiments of this disclosure. Each CSD value can be selected with equal probability, for example.

**FIGS. 8A-8B** present another example of allocations or otherwise assignments of CSD values in accordance with one or more embodiments of the disclosure. The CSD range can be divided into two zones: delay zone 1 and delay zone 2. The zone sizes can be essentially equal as shown in **FIG. 8A,** or can be different as shown in **FIG. 8B.** In one example, each station can adopt a CSD value in the first zone. The CSD value can be randomly picked from a table as described herein or determined by the station's position in a schedule as described herein. For a station with multiple transmit antennas, the station can adopt another CSD value in the second zone. The other CSD value can be randomly selected from a table or determined by the position of the station in a schedule as described herein.

In some legacy radio technology protocols, such as IEEE 802.11n/ac, CSD tables are available for up to 8 antennas. Therefore, embodiments of this disclosure can utilize or otherwise apply modulo operation for single-antenna stations with a position greater than 8 in a schedule. For example, a single-antenna station that is at the 11-th position in the schedule may take the same CSD value as the single-antenna station at the $3^{rd}$ position since $(11 \bmod M) = 3$ for $M = 8$. For a station at the k-th position in the schedule, the CSD value for single-antenna station may be the n-th entry in the CSD table that has $Q$ entries, where $n = k \bmod Q$ for $k$ not equal to a multiple of $Q,$ and $n = Q$ for $k$ equal to a multiple of $Q$.

In addition to triggered or scheduled uplink common transmissions, other uplink transmissions can apply CSD in accordance with aspects of this disclosure. For example, contention based uplink transmission and/or low power uplink transmission can have superposition of the legacy preambles over the air. Thus, in some embodiments, each uplink device can randomly pick a CSD for its uplink transmission.

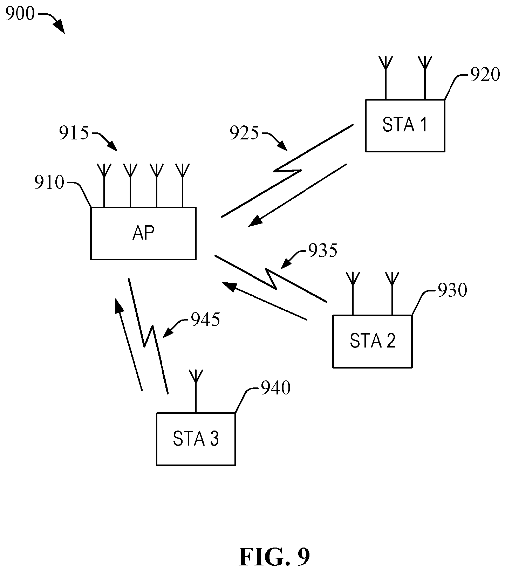

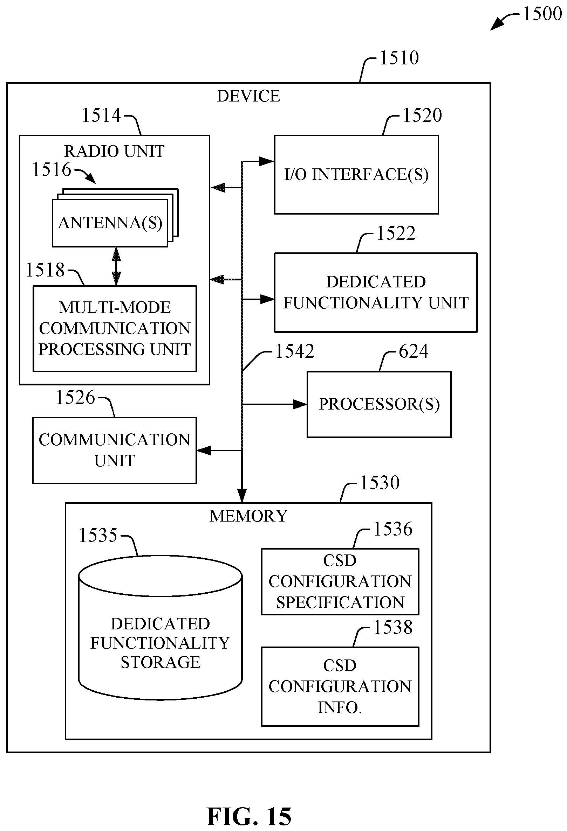

**FIG. 9** illustrates an example of a network environment 900 in accordance with one or more embodiments of the disclosure. The network environment 900 can include one or more wireless communication devices, including an access point (AP) device 910, a station device 920 (labeled STA 1), a station device 930 (labeled STA 2) and a station device 940 (labeled STA 3). The AP device 910 includes antennas 915 (e.g., eight antennas). Such wireless communication devices may communicate in accordance with IEEE 802.11 communication standards, including IEEE 802.11ax. It is noted that, in some embodiments, the network environment 100 can include any number of station devices and/or any other number of AP devices. At least one (or, in some embodiments, each) of the STA devices in the network environment 900 may be embodied in or can include mobile stations, mobile devices, user devices, and/or the like that are non-stationary and do not have fixed locations, and/or other types of computing devices. Similarly, each (or, in some embodiments, at least one) of the AP devices in the network environment 900 may be stationary and may have fixed locations. In some embodiments, the STA(s) and/or AP(s) can include one or more computer systems and/or components similar to that illustrated in FIGS. 15, 17, and 18.

In accordance with some IEEE 802.11ax (High-Efficiency WLAN (HEW)) embodiments, an access point device may operate as a master station device which may be arranged to contend for a wireless medium (e.g., during a contention period) to receive exclusive control of the medium for an HEW control period. The master station device may transmit an HEW master-sync transmission at the beginning of the HEW control period. During the HEW control period, HEW stations may communicate with the master station device in accordance with a non-contention based multiple access technique. This is unlike conventional Wi-Fi communications in which devices communicate in accordance with a contention-based communication technique, rather than a multiple access technique. During HEW control period, the master station device may communicate with HEW stations using one or more HEW frames. Furthermore, during the HEW control period, legacy stations refrain from communicating. In some embodiments, the master-sync transmission may be referred to as an HEW control and schedule transmission.

In some embodiments, the multiple-access technique used during the HEW control period may include a scheduled orthogonal frequency division multiple access (OFDMA) technique, although this is not a requirement. In other embodiments, the multiple access technique may be a time-division multiple access (TDMA) technique or a frequency division multiple access (FDMA) technique. In some embodiments, the multiple access technique may be a space-division multiple access (SDMA) technique.

The master station device may also communicate with legacy station device and/or other type of legacy devices in accordance with legacy IEEE 802.11 communication techniques. In some embodiments, the master station device may also be configurable to communicate with HEW stations outside the HEW control period in accordance with legacy IEEE 802.11 communication techniques, although this is not a requirement.

One or more of the illustrative STA devices in accordance with aspects of this disclosure may be operable by one or more users (not shown). The STA devices (e.g., STA 1, STA 2, STA 3, and/or the like) may include any suitable processor-driven user device including, but not limited to, a desktop computing device, a laptop computing device, a server, a router, a switch, a smartphone, a tablet computer, wearable wireless device (e.g., wristband, watch, glasses, ring, etc.) and so forth.

As described herein, any of the STAs (e.g., STA 1, STA 2, STA 3, and/or the like), and an AP device may be configured to communicate with each other via one or more communications networks, either wirelessly or wired. Any of the communications networks may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks may have any suitable communication range associated therewith and may include, for example, global networks (e.g., the Internet), metropolitan area networks (MANs), wide area networks (WANs), local area networks (LANs), or personal area networks (PANs). In addition, any of the communications networks may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the STAs and the AP may include one or more communication antennae. A communication antenna may be any suitable type of antenna corresponding to the communications protocols used by the STA devices and/or the AP device. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, or the like. The communications antenna may be communicatively coupled to a radio component to transmit and/or receive signals, such as communications signals to and/or from the STA devices.

Any of the STAs and/or the AP may include any suitable radio and/or transceiver for transmitting and/or receiving radio frequency (RF) signals in the bandwidth and/or channels corresponding to the communications protocols utilized by any of the STAs and/or the AP to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In some example embodiments, the radio component, in cooperation with the communications antennas, may be configured to communicate via 2.4 GHz channels (e.g. 802.11b, 802.11g, 802.11n), 5 GHz channels (e.g. 802.11n, 802.11ac), or 60 GHZ channels (e.g. 802.11ad). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In some embodiments, cyclic shift diversity may be included as standard in IEEE 802.11ax wireless communication technologies. For example, an AP device may include a multiple antennas, each of which can be configured to transmit data with a different phase delay. In this manner, spatial stream diversity between the two or more antennas of the AP device can be dramatically increased. Yet, in a design including long training field (LTF) sequences being transmitted using an IEEE 802.11ax uplink multiuser MIMO (UL MU-MIMO), the application of CSD to the long LTF sequence may not provide enough gain for clear reception and/or transmission. Accordingly, several solutions to this gain problem are disclosed herein.

The application of CSD to an LTF sequence (e.g., a stream of data that is transmitted from the AP to one or more STAs, wherein the stream of data includes one or more LTF symbols (e.g., data packets, bits of information, and/or the like)) typically adds a linear phase shift across frequency to the LTF sequence. However, some LTF sequence designs assume approximately flat channel responses across adjacent subcarriers (e.g., signals) such that short orthogonal codes can be applied to different LTF sequences in frequency. Since some entities desire to transmit LTF sequences using substantially larger phase shifts, it may be a concern of these entities that the channel responses don't remain roughly constant (e.g., have sufficient gain) across adjacent subcarriers for clear communication of long LTF sequences.

In some embodiments a linear phase shift can be added to an original LTF sequence such that the shift is in an opposite direction of a CSD phase shift. The LTF sequence can then be defined in a header and/or by other methods with the compensated shift as a new LTF sequence in the standard. When this sequence is applied with a CSD phase shift in the opposite direction, the transmitted signal is the same as original LTF sequence (e.g., an LTF sequence without a linear phase shift) because the applied CSD phase shift cancels out the compensated linear phase shift in the new LTF sequence. As a result, the transmitted LTF sequences received by one or more STAs remain orthogonal among adjacent subcarriers (e.g., STAs). Equivalently, the LTF sequence remains the original LTF sequence without any phase shifts, and CSD may be applied only to particular data portions of the LTF sequence for efficiency. In this manner, large LTF designs may be configured to support CSD.

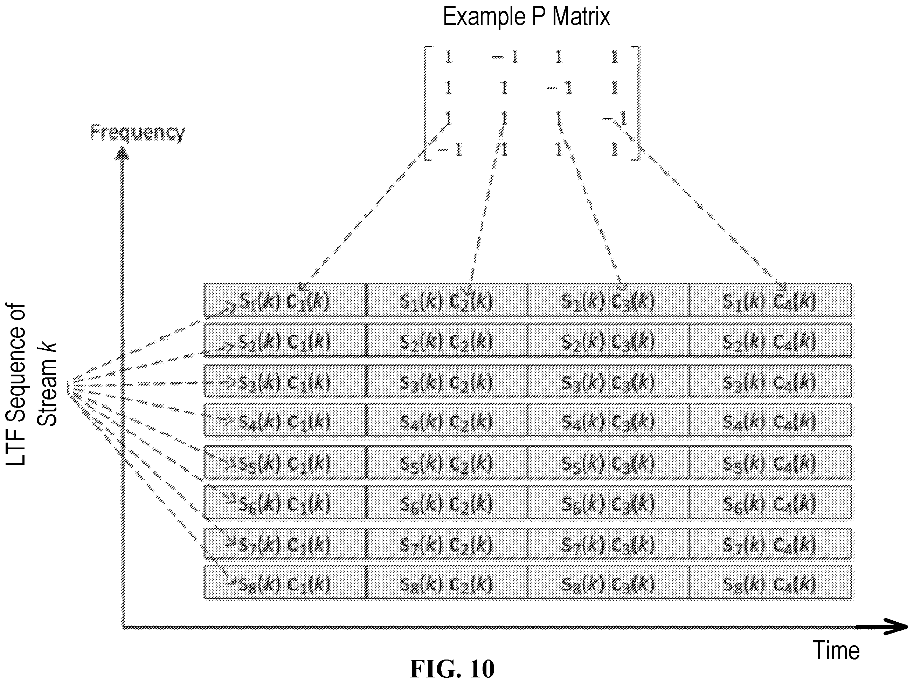

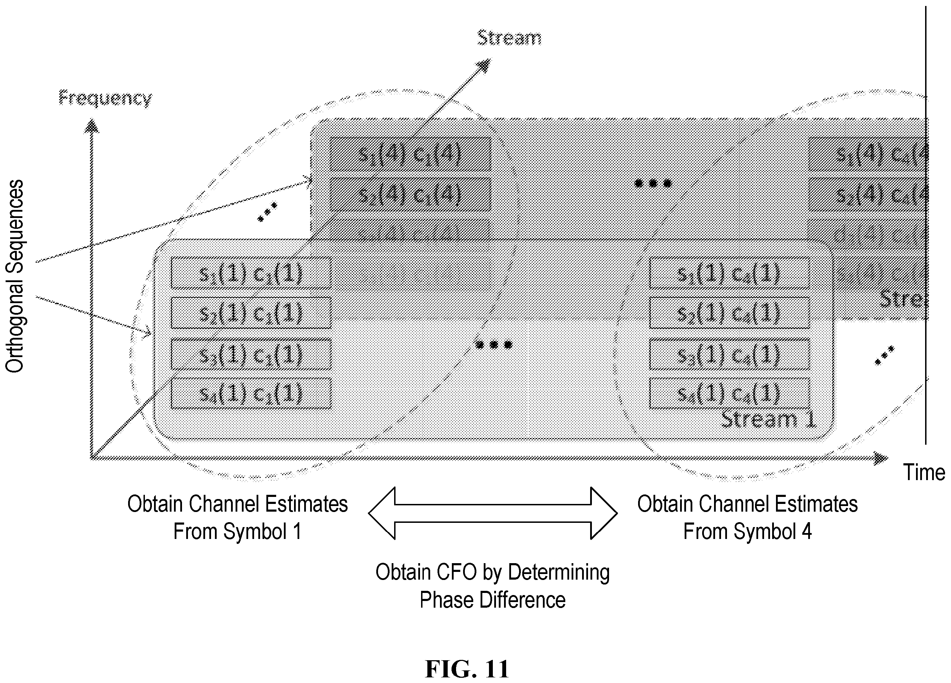

As stated above, **FIGS. 10-11** illustrate an exemplary uplink MU-MIMO system environment 100. Different STAs may utilize different carrier frequency offsets (CFOs) in their clocks. Therefore, the AP may be required to estimate the CFOs of each STA and compensate for them in the LTF sequence design process (e.g., phase shifting processes).

For increasing diversity in spatial streams transmitted by the AP as described above, 802.11n/ac may utilize CSD to add a phase shift to one or more signals being transmitted (e.g., LTF sequences). In some embodiments, there are two types of CSD. A first CSD type may be across antennas both transmitting the same data stream, while a second CSD type may be across antennas each transmitting different data streams. The second CSD type typically uses much larger CSD values (e.g., larger phase shifts) than the first one. In this disclosure, we address the problem caused by the larger CSD values.

For enabling the AP to execute CFO estimation using LTF symbols of an LTF sequence, STAs may transmit orthogonal LTF sequences across frequency to the AP. Namely, besides the conventional P-matrix codes in time domain, orthogonal codes are applied to different STAs' LTF sequences for each LTF symbol as shown in Figure 2. The orthogonal codes allow the AP to easily obtain rough channel estimates from any block of adjacent subcarriers for each STA and for each LTF symbol. By comparing the phase difference of the estimates from different LTF symbols, the AP estimates the CFOs of each STA. Additionally, the AP may be configured to determine a phase shift to apply to each LTF sequence for each respective STA based on the estimated CFO of each respective STA. Alternatively, the AP may determine a distance between using location information (e.g., global positioning system (GPS) coordinates, and/or the like) of the STA and/or the AP.

When large CSD values are applied among the STAs, a large linear phase shift is typically added to the channel responses across frequency. However, the channel responses of the adjacent subcarriers don't remain roughly constant, and the signals received by the AP from different STAs over the adjacent subcarriers are no longer orthogonal with each other. This may cause a problem for the AP to obtain the channel and/or CFO estimates.

For an application of CSD to LTF sequences to be effective, the AP may assign CSD values and/or ranges of values to different streams, STAs, and/or antennas in UL MU-MIMO. In some embodiments, CSD values (e.g., phase shifts) defined in legacy 802.11n/ac for a single user and downlink MU-MIMO can be reused. Since 802.11ax typically uses four times the duration for the OFDM symbol of the data portion (e.g., LTF sequence), larger CSD values than a legacy value may also be used in 802.11ax. The assignment of CSD values to UL MU-MIMO stations may be included in a trigger frame and/or schedule frame of UL MU-MIMO, and/or in a physical layer header like HE-SIG-B. Similar to the legacy 802.11n/ac, one or more tables of CSD values for different numbers of streams, STAs, and/or antennas may be specified in a 802.11 ax standard. Further, an order of streams and/or stations specified in a trigger frame and/or schedule frame may be used as an index for looking up and/or recalling respective CSD values or ranges of values from the table.

In some embodiments, an LTF sequence may be pre-shifted (e.g., phase shifted) before application of a CSD phase shift to the LTF sequence. In some embodiments, a new LTF sequence for each stream (or each STA) is defined in a new standard (e.g., header, and/or the like). A linear pre-shift of phase may be added to a common LTF sequence such that there is no linear phase shift at the transmitted LTF sequence after a CSD phase shift is applied. Namely, the pre-shift is a phase shift in an opposite direction of the CSD shift and thereby cancels out the effect of a CSD phase shift. For example, a CSD phase shift for stream k across subcarriers may be denoted by $[e^{j\theta_1(k)} e^{j\theta_2(k)} ... e^{j\theta_N(k)}]$, while a common LTF sequence, with frequency domain orthogonal codes, may be denoted by $[s_1(k)c_t(k) s_2(k)c_t(k) \cdots s_N(k)c_t(k)]$. In some embodiments, a new LTF sequence for stream k may be defined as $[s_1(k)c_t(k)e^{-j\theta_1(k)} s_2(k)c_t(k)e^{-j\theta_2(k)} ... s_N(k)c_t(k)e^{-j\theta_N(k)}]$. After a CSD phase shift is applied to the LTF sequence, the resulting signal for stream k that is transmitted by the AP to one or more STAs may be defined as $[s_1(k)ct(k) s_2(k)c_t(k) ... s_N(k)c_t(k)]$, which doesn't have any linear phase shift and maintains orthogonality among streams. It is noted that the CSD phase shift is still applied to the transmission of the data portion such that the CSD gain remains.

In other embodiments, an LTF sequence, with frequency domain orthogonal codes, may be unchanged with no CSD phase shift. For maintaining the orthogonality, a CSD phase shift may not be applied to the LTF sequence of one or more LTF symbols. In this manner, after processing LTF symbols of an LTF sequence, the AP and/or the STA obtains channel estimates and/or CFO estimates without application of a CSD phase shift. For increasing diversity, the OFDM and/or OFDMA symbols of a data portion of a signal (e.g., an LTF sequence) are sent with a CSD phase shift (e.g., included in a header, in a data packet, and/or the like). Therefore, an equivalent channel for transmission is a channel, estimated from the LTF symbols, multiplied by a linear phase shift. For example, channel responses for stream k estimated from the LTF symbols of an LTF sequence may be denoted by $[h_1(k) h_2(k) \cdots h_N(k)]$, while CSD phase shifts for the stream may be denoted by $[e^{j\theta_1(k)} e^{j\theta_2(k)} ... e^{j\theta_N(k)}]$. Channel estimates may then be used for decoding subsequent symbols at a data portion as denoted by $[h_1(k)e^{j\theta_1(k)} h_2(k)e^{j\theta_2(k)} \cdots h_N(k)e^{j\theta_N(k)}]$. Namely, an STA may not apply per-stream CSD phase shifting for a particular LTF sequence portion (e.g., an LTF symbol portion), but may indeed apply per-stream CSD phase shifting for a second particular LTF sequence portion (e.g., a data portion). The AP may synthesize channel responses for the data portion by adding CSD phase shifts to the channels estimated from the LTF and/or based on the CFO estimations. Further, since the AP may assign CSD values and/or a range of values to streams and/or STAs at the beginning of UL MU-MIMO, the AP can determine the CSD shift values and/or ranges of values of each stream.

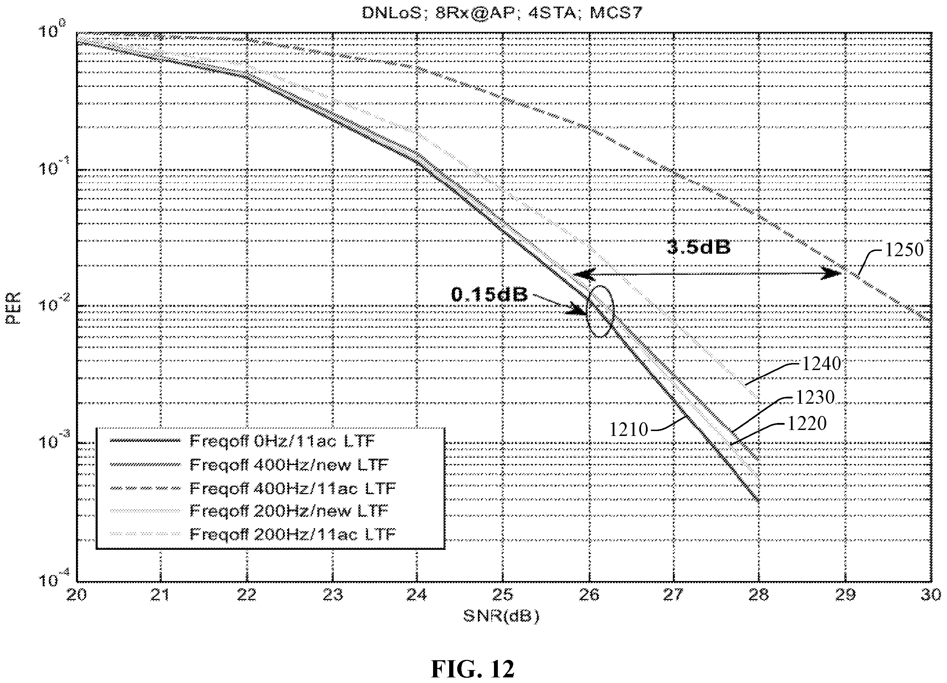

To compare performance of some approaches described herein, simulations of network performance can be conducted. **FIG. 12** illustrates results of such simulations. More specifically, **FIG. 12** presents simulations of packet error rate (PER) as a function for signal-to-noise ratio (SNR) for an implementation in which an LTF sequence is pre-shifted prior to the application of CSD, and another implementation in which CSD is not applied (e.g., LTF remains unchanged), as described herein. Trace 1210 represents an idealized case in which CFO is strictly zero (represented as 0 MHz) and LTF is not pre-shifted. Traces 1220 and 1230 represent, respectively, cases in which CFO is about 200 MHZ and about 400 MHz, in each of the cases the LTF sequence is pre-shifted as described herein. It can be gleaned from the simulations that the approaches for channel estimation in accordance with this disclosure have minimal signal degradation compared to the idealized case without any CFO estimation. Performance degradation can be about 0.15 dB for PER of abou 1 %, as shown. Without intending to be bound by theory and/or modeling, the substantial preservation of performance can be attributed to the fact that a CSD phase shift does not affect CFO estimation of an LTF symbol sequence. In stark contrast, the proposed solutions have significant gain comparing with an 802.11 ac LTF sequence where the CFO of the station devices in the network environment cannot be estimated during an LTF sequence portion. Specifically, traces 1240 and 1250 represent, respectively, cases in which CFO is about 200 MHZ and about 400 MHz, and the CFO cannot be estimated from an LTF sequence. The approaches for channel estimation in accordance with the disclosure present a gain of about 3.5 dB for a PER of about 2 %.

The simulations for which the results are shown in **FIG. 12** are performed under the following scenario: (i) 802.11 channel model having D profile models propagation of wireless signals; (ii) communication network includes 4 STA devices, each having 1 Tx (transmitter) antenna (see, e.g., station device 940 (referred to as STA 3)) and one AP device having 8 Rx (receiver) antennas (see, e.g., AP device 910, wherein the number of antennas 915 is eight; (iii) modulation coding scheme (MCS) index equal to 7; and (iv) estimated CFO is equal to about +/- 200 MHz and/or +/- 400 Hz. Similar results also can be obtained with other MCS indices.

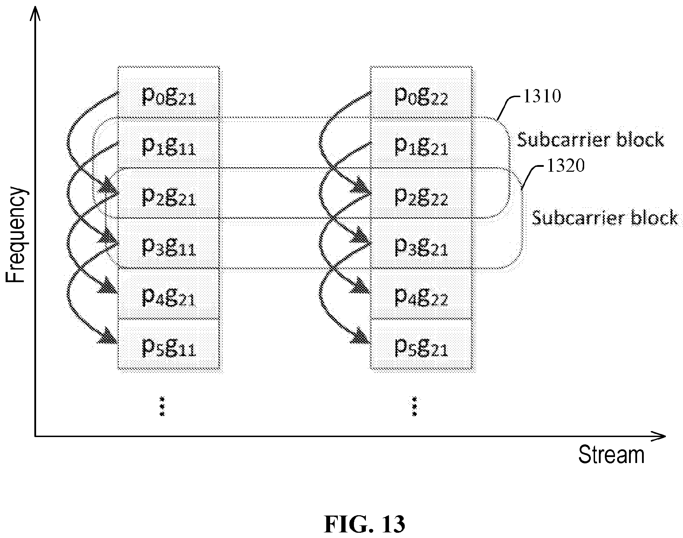

Additional or alternative approaches for channel estimation include utilization of interference cancellation. It is noted that CSD phase shifts can make an effective channel response vary across adjacent subcarriers due, at least in part, to added linear phase shifts and the fact that an underlying channel essentially remains constant across adjacent subcarriers. In addition, in some embodiments, the added linear phase shifts can be determined by the AP device (e.g., AP device 910) by assigning CSD delay (e.g., phase shift) values and/or ranges of values to each uplink STA device in an uplink MU-MIMO burst (e.g., transmission). Therefore, such an assignment of delays can permit the AP device to access to an exact or otherwise satisfactory estimation of a range of an arrival time of each scheduled STA' signal(s) (e.g., channel response). Therefore, in one aspect, a receiver device (or circuitry, in some embodiments) of the AP device can determine or otherwise access an added linear phase shift of each channel response, and can estimate the channel response by accounting for the interferences among LTF symbol sequences of different streams. In some embodiments, a zero-forcing and/or minimum mean-square error (MMSE) receiver can be used for estimating the channels (e.g., the channel responses, the phase shifts, the CFO, and/or the like of each respective channel) from a block of adjacent subcarriers, such as blocks 1310 and 1320 shown in **FIG. 13.**

For example, in a scenario in which a network environment or system has two STA devices and each STA device has one stream to transmit to an AP device. For a block of two adjacent subcarriers (e.g., block 1310 or block 1320), channel responses for the two STA devices can be represented as *(a, a)* and *(b,b),* respectively. In one example, LTF sequences without CSD may be defined as $\begin{bmatrix} p_1 g_{11} \\ p_2 g_{21} \end{bmatrix}$ and $\begin{bmatrix} p_1 g_{21} \\ p_2 g_{22} \end{bmatrix}$, respectively, where $p_i$, with *i* a positive integer, is a stream-common code for subcarrier *i* and, thus, varies across subcarriers. In addition, $\begin{bmatrix} g_{11} \\ g_{21} \end{bmatrix}$ and $\begin{bmatrix} g_{21} \\ g_{22} \end{bmatrix}$ are stream-specific codes for differentiating streams or STA devices. For low complexity, CSD may be applied to generate stream-specific codes for streams and/or stations across subcarriers as illustrated in **FIG. 13.** Received signals on two adjacent subcarriers of a subcarrier block (e.g., block 1310 or block 1320) can be represented as:

$$\begin{bmatrix} y_1 \\ y_2 \end{bmatrix} = \begin{bmatrix} p_1 & 0 \\ 0 & p_2 \end{bmatrix} \begin{bmatrix} g_{11} & g_{12} \\ g_{21}e^{j\Delta\theta_1} & g_{22}e^{j\Delta\theta_2} \end{bmatrix} \begin{bmatrix} e^{j\theta_1} & 0 \\ 0 & e^{j\theta_2} \end{bmatrix} \begin{bmatrix} a & 0 \\ 0 & b \end{bmatrix} + \begin{bmatrix} n_1 \\ n_2 \end{bmatrix}$$

, where: $\Delta\theta_k$ is a CSD phase shift for stream *k* (a natural number); $\theta_k$ is the CSD phase shift for stream *k* at the current subcarrier block (e.g., block 1310 or block 1320); and $\begin{bmatrix} n_1 \\ n_2 \end{bmatrix}$ are the noise vectors. The channel estimates (e.g., CFO estimates) with a zero-forcing filter can be determined or otherwise expressed as:

$$\begin{bmatrix} \hat{a} \\ \hat{b} \end{bmatrix} = \begin{bmatrix} e^{-j\theta_1} & 0 \\ 0 & e^{-j\theta_2} \end{bmatrix} \begin{bmatrix} g_{11} & g_{12} \\ g_{21}e^{j\Delta\theta_1} & g_{22}e^{j\Delta\theta_2} \end{bmatrix}^{-1} \begin{bmatrix} p_1^* & 0 \\ 0 & p_2^* \end{bmatrix} \begin{bmatrix} y_1 \\ y_2 \end{bmatrix}.$$

If CSD is used in generating the stream or station device specific codes as illustrated in **FIG. 13**, the inversion $\begin{bmatrix} g_{11} & g_{12} \\ g_{21}e^{j\Delta\theta_1} & g_{22}e^{j\Delta\theta_2} \end{bmatrix}^{-1}$ may repeat every $Q$ subcarriers, where $Q$ is a natural number indicative of the subcarrier block size (e.g., subcarrier block size is Q = 2 for block 1310 and block 1320 shown in **FIG. 13).** Therefore, complexity is relatively low because inversion can be computed $Q$ times, and then used for the entirety of an allocated subband.

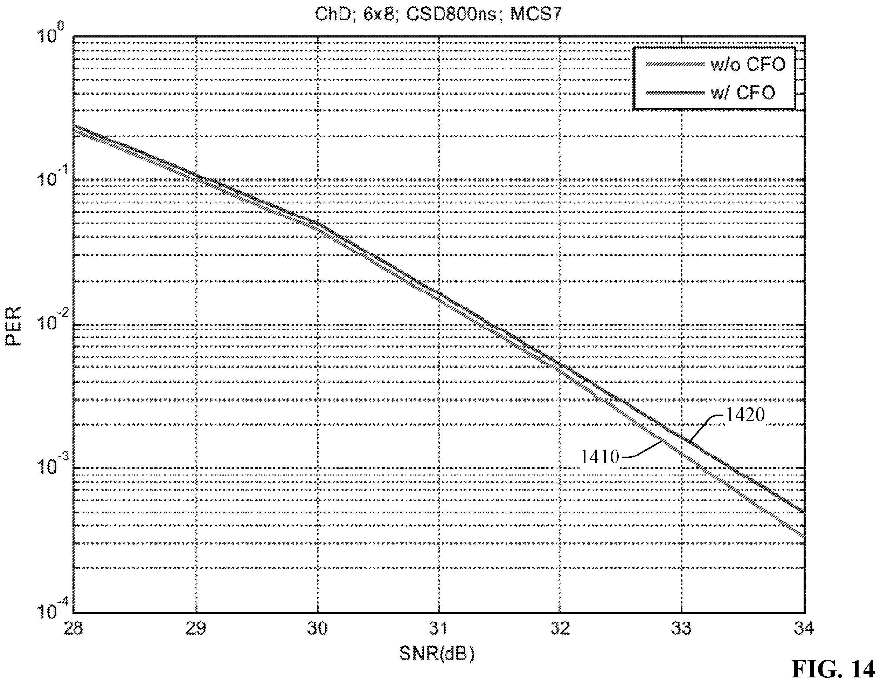

**FIG. 14** illustrates an example simulation of network performance using cyclic shift diversity for interference cancellation in accordance with one or more embodiments of the disclosure. More specifically, the simulations are directed to determination of PER as a function of SNR for a defined network environment. Traces 1410 and 1420 correspond, respective, to scenarios in which CFO is zero or otherwise negligible and CFO is equal to about +/- 400 MHz. In such an approach for channel estimation there is negligible degradation even if a large CSD phase shift is applied in an LTF symbol portion of an LTF sequence. The simulations are performed under the following scenario: (i) IEEE 802.11 channel model having a D profile model for propagation of wireless signals; (ii) communication network includes 6 STA devices with 1 Tx antenna at each STA device, and one AP device having 8 Rx antennas (see, e.g., AP device 910, wherein the number of antennas 915 is eight); (iii) MCS index equal to 7; (iv) CSD 800 ns; and (v) estimated CFO is equal to about +/- 400 Hz, when included in simulations. It is noted that MCS 7 corresponds to 64 QAM modulation and 5/6 coding rate. Simulations for CSD values of 0, 200 ns, 400 ns, 600 ns, and 650 ns provide similar results. Similar simulation results can be obtained with other MCS indices.

**FIG. 15** illustrates a block-diagram of an example embodiment 1500 of a communication device 1510 that can operate in accordance with at least some aspects of the disclosure. The exemplified device 1510 can include a communication device and can operate in accordance with at least some aspects of the disclosure, implementing UL LTFs as described herein, for example. Accordingly, in some embodiments, the device 1510 can embody or can constitute any one of devices in the operational environment 100, such as one of the AP devices 114a, 114b, or 114c, or one of the other illustrated devices. Thus, in some aspects, the device 1510 can provide one or more specific functionalities-such as operating as a gateway device, a router device, or a sensor hub device; operating as a digital camera and generating digital images (e.g., static pictures and/or motion pictures); operating as a navigation device; operating as a biometric device (e.g., a heart rate monitor, a pressure monitor, a glucometer, an iris analyzer, a fingerprint analyzer, etc.); dosing and delivering an amount of a drug or other compound; operating as a sensor and sensing a defined physical quantity, such as temperature and/or pressure, or motion; operating as another sensor and sensing a compound in gas phase or liquid phase; operating as a controller for configuring a second defined physical quantity, managing energy, managing access to an environment, managing illumination and/or sound, regulating a defined process, such an automation control process, or the like; generating current, voltage, or other type of signal via inductive coils; a combination of the foregoing; a derivative functionality of the foregoing; or the like. To that end, the device 1510 can include one or more functionality units 1522 (referred to as dedicated functionality unit 1522) that can include optical elements (e.g., lenses, collimators, light guides, light sources, light detectors (such as semiconductor light detectors), focusing circuitry, etc.); temperature sensors; pressure sensors; gas sensors; motion sensors, including inertial sensors (such as linear accelerator and/or a gyroscope); mechanical actuators (such as locks, valves, and the like); a combination of the foregoing; or the like.

In addition or in other aspects, a specific functionality of the device 1510 can be provided or otherwise implemented via one or more processors 1524. In some implementations, at least one of the processor(s) 1524 can be integrated with dedicated functionality unit 1522. In some implementations, at least one of the processor(s) (e.g., one or more of the processor(s) 1524 or other processor(s)) can receive and operate on data and/or other type of information (e.g., analog signals) generated by components of the dedicated functionality unit 1522. The at least one processor can execute a module in order to operate on the data and/or other type of information and, as a result, provide a defined functionality. The module can be embodied in or can include, for example, a software application stored in a memory device integrated into or functionally coupled to the device. For instance, the module can be retained in one or more memory devices 1535 (collectively referred to as dedicated functionality storage 1535), where the dedicated functionality storage 1535 can be retained within one or more other memory devices 1530 (collectively referred to as memory 1530). In addition or in other implementations, at least a second one of the processor(s) (e.g., one or more of processor(s) 1524 or other processor(s) available to the dedicated functionality unit 1522) can control the operation or duty cycle of a portion of the dedicated functionality unit 1522 so as to collect data and/or other type of information; provide an amount (or a dose) of a compound or acquire another amount of another compound or material; a combination of the foregoing; or the like. At least one of the units that constitute the dedicated functionality unit 1522 can generate control signals (e.g., interruptions, alarms, or the like) and/or can cause the device 1510 to transition between operational states in response to a defined condition of the device 1510 or its environment. At least some of the control signals can be sent to an external device (not depicted in **FIG. 15)** via an I/O interface of the I/O interfaces 1520. The type and/or number of components included in the dedicated functionality unit 1522 can establish, at least in part, the complexity of the device 1510. In some examples, the device 1510 can embody or can constitute an AP device, and in other examples, the device 1510 can embody or can constitute a user device or another type of device that can communicate wirelessly (such as customer presmises equipment).

The communication device 810 also can operate as a wireless device and, as mentioned, can embody or can comprise an access point, a mobile computing device (e.g., user equipment or station device), or other types of communication devices (e.g., CPE) that can transmit and/or receive wireless communications in accordance with this disclosure. For example, the communication device 1510 can embody the AP device 910 or at least one of the stations STA 1 920, STA 2 930, and STA 3 940. In some aspects, to permit wireless communication, including the configuration of CSD in accordance with aspects as described herein, the communication device 1510 includes a radio unit 1514 and a communication unit 1526. In some implementations, the communication unit 1526 can generate packets or other types of information blocks via a network stack, for example, and can convey the packets or other types of information block to the radio unit 1514 for wireless communication. In one embodiment, the network stack (not shown) can be embodied in or can constitute a library or other types of programming module, and the communication unit 1526 can execute the network stack in order to generate a packet or other types of information block. Generation of the packet or the information block can include, for example, generation of control information (e.g., checksum data, communication address(es)), traffic information (e.g., payload data), and/or formatting of such information into a specific packet header.

As illustrated, the radio unit 1514 can include one or more antennas 1516 and a multi-mode communication processing unit 1518. In some embodiments, the antenna(s) 1516 can be embodied in or can include directional or omnidirectional antennas, including, for example, dipole antennas, monopole antennas, patch antennas, loop antennas, microstrip antennas or other types of antennas suitable for transmission of RF signals. In addition, or in other embodiments, at least some of the antenna(s) 1516 can be physically separated to leverage spatial diversity and related different channel characteristics associated with such diversity. In addition or in other embodiments, the multi-mode communication processing unit 1518 that can process at least wireless signals in accordance with one or more radio technology protocols and/or modes (such as MIMO, single-input-multiple-output (SIMO), multiple-input-single-output (MISO), and the like. Each of such protocol(s) can be configured to communicate (e.g., transmit, receive, or exchange) data, metadata, and/or signaling over a specific air interface. The one or more radio technology protocols can include 3GPP UMTS; LTE; LTE-A; Wi-Fi protocols, such as those of the Institute of Electrical and Electronics Engineers (IEEE) 802.11 family of standards; Worldwide Interoperability for Microwave Access (WiMAX); radio technologies and related protocols for ad hoc networks, such as Bluetooth or ZigBee; other protocols for packetized wireless communication; or the like). The multi-mode communication processing unit 1518 also can process non-wireless signals (analogic, digital, a combination thereof, or the like).

In one embodiment, e.g., example embodiment 1600 shown in **FIG. 15,** the multi-mode communication processing unit 1518 can comprise a set of one or more transmitters/receivers 1604, and components therein (amplifiers, filters, analog-to-digital (A/D) converters, etc.), functionally coupled to a multiplexer/demultiplexer (mux/demux) unit 1608, a modulator/demodulator (mod/demod) unit 1616 (also referred to as modem 1616), and a coder/decoder unit 1612 (also referred to as codec 1612). Each of the transmitter(s)/receiver(s) can form respective transceiver(s) that can transmit and receive wireless signal (e.g., electromagnetic radiation) via the one or more antennas 1516. It should be appreciated that in other embodiments, the multi-mode communication processing unit 1518 can include other functional elements, such as one or more sensors, a sensor hub, an offload engine or unit, a combination thereof, or the like. While illustrated as separate blocks in the communication device 1510, it should be appreciated that in some embodiments, at least a portion of the multi-mode communication processing unit 1518 and the communication unit 1526 can be integrated into a single unit (e.g., a single chipset or other type of solid state circuitry). In one aspect, such a unit can be configured by programmed instructions retained in the memory 1530 and/or other memory devices integrated into or functionally coupled to the unit.

Electronic components and associated circuitry, such as mux/demux unit 1608, codec 1612, and modem 1616 can permit or facilitate processing and manipulation, e.g., coding/decoding, deciphering, and/or modulation/demodulation, of signal(s) received by the commmunication device 1510 and signal(s) to be transmitted by the communication device 1510. In one aspect, as described herein, received and transmitted wireless signals can be modulated and/or coded, or otherwise processed, in accordance with one or more radio technology protocols. Such radio technology protocol(s) can include 3GPP UMTS; 3GPP LTE; LTE-A; Wi-Fi protocols, such as IEEE 802.11 family of standards (IEEE 802.ac, IEEE 802.ax, and the like); WiMAX; radio technologies and related protocols for ad hoc networks, such as Bluetooth or ZigBee; other protocols for packetized wireless communication; or the like.

The electronic components in the described communication unit, including the one or more transmitters/receivers 1604, can exchange information (e.g., data, metadata, code instructions, signaling and related payload data, combinations thereof, or the like) through a bus 1614, which can embody or can comprise at least one of a system bus, an address bus, a data bus, a message bus, a reference link or interface, a combination thereof, or the like. Each of the one or more receivers/transmitters 1604 can convert signal from analog to digital and vice versa. In addition or in the alternative, the receiver(s)/transmitter(s) 1604 can divide a single data stream into multiple parallel data streams, or perform the reciprocal operation. Such operations may be conducted as part of various multiplexing schemes. As illustrated, the mux/demux unit 1608 is functionally coupled to the one or more receivers/transmitters 1604 and can permit processing of signals in time and frequency domain. In one aspect, the mux/demux unit 1608 can multiplex and demultiplex information (e.g., data, metadata, and/or signaling) according to various multiplexing schemes such as time division multiplexing (TDM), frequency division multiplexing (FDM), orthogonal frequency division multiplexing (OFDM), code division multiplexing (CDM), space division multiplexing (SDM). In addition or in the alternative, in another aspect, the mux/demux unit 1608 can scramble and spread information (e.g., codes) according to most any code, such as Hadamard-Walsh codes, Baker codes, Kasami codes, polyphase codes, and the like. The modem 1616 can modulate and demodulate information (e.g., data, metadata, signaling, or a combination thereof) according to various modulation techniques, such as frequency modulation (e.g., frequency-shift keying), amplitude modulation (e.g., M-ary quadrature amplitude modulation (QAM), with M a positive integer; amplitude-shift keying (ASK)), phase-shift keying (PSK), and the like). In addition, processor(s) that can be included in the communication device 1510 (e.g., processor(s) included in the radio unit 1514 or other functional element(s) of the communication device 1510) can permit processing data (e.g., symbols, bits, or chips) for multiplexing/demultiplexing, modulation/demodulation (such as implementing direct and inverse fast Fourier transforms) selection of modulation rates, selection of data packet formats, inter-packet times, and the like.

The codec 1612 can operate on information (e.g., data, metadata, signaling, or a combination thereof) in accordance with one or more coding/decoding schemes suitable for communication, at least in part, through the one or more transceivers formed from respective transmitter(s)/receiver(s) 1604. In one aspect, such coding/decoding schemes, or related procedure(s), can be retained as a group of one or more computer-accessible instructions (computer-readable instructions, computer-executable instructions, or a combination thereof) in one or more memory devices 1530 (collectively referred to as memory 1530). In a scenario in which wireless communication among the communication device 1510 and another computing device (e.g., a station or other types of user equipment) utilizes MIMO, MISO, SIMO, or SISO operation, the codec 1612 can implement at least one of space-time block coding (STBC) and associated decoding, or space-frequency block (SFBC) coding and associated decoding. In addition or in the alternative, the codec 1612 can extract information from data streams coded in accordance with spatial multiplexing scheme. In one aspect, to decode received information (e.g., data, metadata, signaling, or a combination thereof), the codec 1612 can implement at least one of computation of log-likelihood ratios (LLR) associated with constellation realization for a specific demodulation; maximal ratio combining (MRC) filtering, maximum-likelihood (ML) detection, successive interference cancellation (SIC) detection, zero forcing (ZF) and minimum mean square error estimation (MMSE) detection, or the like. The codec 1612 can utilize, at least in part, mux/demux unit 1608 and mod/demod unit 1616 to operate in accordance with aspects described herein.

With further reference to FIG. 15, the communication device 1510 can operate in a variety of wireless environments having wireless signals conveyed in different electromagnetic radiation (EM) frequency bands. To at least such end, the multi-mode communication processing unit 1518 in accordance with aspects of the disclosure can process (code, decode, format, etc.) wireless signals within a set of one or more EM frequency bands (also referred to as frequency bands) comprising one or more of radio frequency (RF) portions of the EM spectrum, microwave portion(s) of the EM spectrum, or infrared (IR) portion(s) of the EM spectrum. In one aspect, the set of one or more frequency bands can include at least one of (i) all or most licensed EM frequency bands, (such as the industrial, scientific, and medical (ISM) bands, including the 2.4 GHz band or the 5 GHz bands); or (ii) all or most unlicensed frequency bands (such as the 60 GHz band) currently available for telecommunication.

The communication device 1510 can receive and/or transmit information encoded and/or modulated or otherwise processed in accordance with aspects of the present disclosure. To at least such an end, in some embodiments, the communication device 1510 can acquire or otherwise access information wirelessly via the radio unit 1514 (also referred to as radio 1514), where at least a portion of such information can be encoded and/or modulated in accordance with aspects described herein. More specifically, for example, the information can include packets (e.g., PPDUs) in accordance with embodiments of the disclosure, such as those shown in FIGS. 3-7. As illustrated, in some embodiments, the communication device 1510 can include one or more memory elements 1536 (collectively referred to as CSD configuration specification 1536) that can include information defining or otherwise specifying CSD values that can be assigned to the communication device 1510 and/or at least one antenna of the antenna(s) 1516 in accordance with one or more aspects described herein. In addition or in other embodiments, the CSD specification configuration 1536 can specify one or more rules or one or more criteria for determining or otherwise configuring a CSD value for an antenna of the antenna(s) 1516. Such rule(s) and/or criteria can be defined in accordance with aspects described herein in connection with specifying a CSD value for a communication and/or an antenna thereof (see, e.g., FIGS. 7A, 7B, 8A, and/or 8B). In addition, the communication device 1510, via the communication unit 1526, for example, can determine and/or configure CSD values and/or CSD rules in accordance with this disclosure and can retain those values in one or more memory elements 1538 (collectively referred to as CSD configuration information 1538).

The memory 1530 can contain one or more memory elements having information suitable for processing information received according to a predetermined communication protocol (e.g., IEEE 802.11ac or IEEE 802.11ax).

While not shown, in some embodiments, one or more memory elements of the memory 1530 can include computer-accessible instructions that can be executed by one or more of the functional elements of the communication device 1510 in order to implement at least some of the functionality for cyclic shift diversity in wireless communication in accordance with aspects described herein. One or more groups of such computer-accessible instructions can embody or can constitute a programming interface that can permit communication of information (e.g., data, metadata, and/or signaling) between functional elements of the communication device 1510 for implementation of such functionality.

As illustrated, the communication device 1510 can include one or more I/O interfaces 1520. At least one of the I/O interface(s) 1520 can permit the exchange of information between the communication device 1510 and another computing device and/or a storage device. Such an exchange can be wireless (e.g., via near field communication or optically-switched communication) or wireline. At least another one of the I/O interface(s) 1520 can permit presenting information visually, aurally, and/or via movement to an end-user of the communication device 1510. In one example, a haptic device can embody the I/O interface of the I/O interface(s) 1520 that permit conveying information via movement. In addition, in the illustrated communication device 1510, a bus architecture 1542 (also referred to as bus 1542) can permit the exchange of information (e.g., data, metadata, and/or signaling) between two or more functional elements of the communication device 1510. For instance, the bus 1542 can permit exchange of information between two or more of (i) the radio unit 1514 or a functional element therein, (ii) at least one of the I/O interface(s) 1520, (iii) the communication unit 1526, or (iv) the memory 1530. In addition, one or more application programming interfaces (APIs) (not depicted in **FIG. 15)** or other types of programming interfaces that can permit exchange of information (e.g., data and/or metadata) between two or more of the functional elements of the communication device 1510. At least one of such API(s) can be retained or otherwise stored in the memory 1530. In some embodiments, it should be appreciated that at least one of the API(s) or other programming interfaces can permit the exchange of information within components of the communication unit 1526. The bus 1542 also can permit a similar exchange of information. In some embodiments, the bus 1552 can embody or can include at least one of a system bus, an address bus, a data bus, a message bus, a reference link or interface, a combination thereof, or the like. In addition or in other embodiments, the bus 1552 can include, for example, components for wireline and wireless communication.

It noted that portions of the communication device 1510 can embody or can constitute an apparatus. For instance, the multi-mode communication processing unit 1518, the communication unit 1526, at least one of the processor(s) 624, and at least a portion of the memory 1530 can embody or can constitute an apparatus that can operate in accordance with one or more aspects of this disclosure. Specifically, in some embodiments, such an apparatus can include at least one memory device (e.g., the memory 1530) having programmed instructions, and at least one processor functionally coupled to the at least one memory device and configured to execute the programmed instructions, and in response to execution of the programmed instructions, the at least one processor can be further configured to perform or facilitate various operations associated with configuration of CSD values and/or LTFs in accordance with aspects of the present disclosure. For example, the at least one processor can be configured to receive an indication to transmit a signal concurrently with at a least one second communication device; and to determine a cyclic shift diversity (CSD) value to form the signal. In some aspects, the CSD value can range from about 0 ns to about 200 ns. In addition or in some embodiments, the apparatus can include a communication unit configured to generate at least a portion of the signal, and a radio unit configured to transmit the signal. Further or in other embodiments, the at least one processor can be configured to receive scheduling information indicative of the CSD value, and to configure the CSD to form the signal. For instance, the radio unit 1514 can receive wirelessly information representative of at least a portion of the scheduling information. The communication unit 1526 can operate on the information and can send second information to the at least one processor, where the second information embodies or includes the scheduling information. Furthermore or in yet other embodiments, the at least one processor can be configured to select the CSD value from a defined or otherwise predetermined information structure within a memory device of the at least one memory device. For instance, the information structure can be retained within the CSD configuration information 1538 and/or other memory device of the memory 1530.

For another example, the apparatus formed from a combination of the multi-mode communication processing unit 1518, the communication unit 1526, at least one of the processor(s) 624, and at least a portion of the memory 1530 can include computer-accessible instructions stored in one or more memories of the memory 1530. In response to execution, the instructions can configure at least one processor of the processor(s) 1524 to identify a channel response received from and associated with the wireless communication station, wherein the channel response comprises a long training field (LTF) sequence comprising one or more LTF symbols. The at least one processor can be further configured to determine a carrier frequency offset (CFO) of the wireless communication station based at least in part on the channel response, and determine a phase difference between the access point and the wireless communication based at least in part on the calculated CFO. In addition, the at least one processor can be further configured to add a first phase shift in a first direction to at least a portion of the LTF sequence based at least in part on the determined phase difference, thereby resulting in a modified channel response. Further or in some aspects, the at least one processor can be configured to direct or otherwise cause the communication unit 1526 and/or the radio unit 1514 to transmit to the wireless communication station the modified channel response.

In certain embodiments of such an apparatus, to add the first phase shift in the first direction to at least a portion of the LTF sequence, the at least one processor can add a second phase shift in a second direction to at least a portion of the LTF sequence, wherein the second phase shift is equal to the first phase shift, and wherein the second direction is opposite the first direction. In other embodiments of the apparatus, to add a first phase shift in a first direction to at least a portion of the LTF sequence, the at least one processor can be configured to add the first phase shift to a data portion of the LTF sequence. In yet other embodiments, to adding a first phase shift in a first direction to at least a portion of the LTF sequence, the at least one processor can be configured to assign the first phase shift to the wireless communication station. In some aspects, the CFO of the wireless communication station can be determined, e.g., by the communication unit 1526, the multi-mode communication processing unit 1518, and/or one of the at least processor, using at least one of a zero-forcing minimum mean-square error (MMSE) receiver of the access point. In addition or in some other aspects, a determined phase difference can be stored within the CSD configuration info, 1538, for example, in a lookup table upon determination and later recalled from the lookup table.

Further or in yet other embodiments of such an apparatus, the communication unit 1526 and/or the radio unit 1514 can receive and/or transmit a modified channel response from/to the wireless communication station over an uplink multi-user multiple input multiple output (UL MU-MIMO) wireless communication network. In some examples, transmitting the modified channel response can include establishing a secure wireless connection between the access point and the wireless communication station.

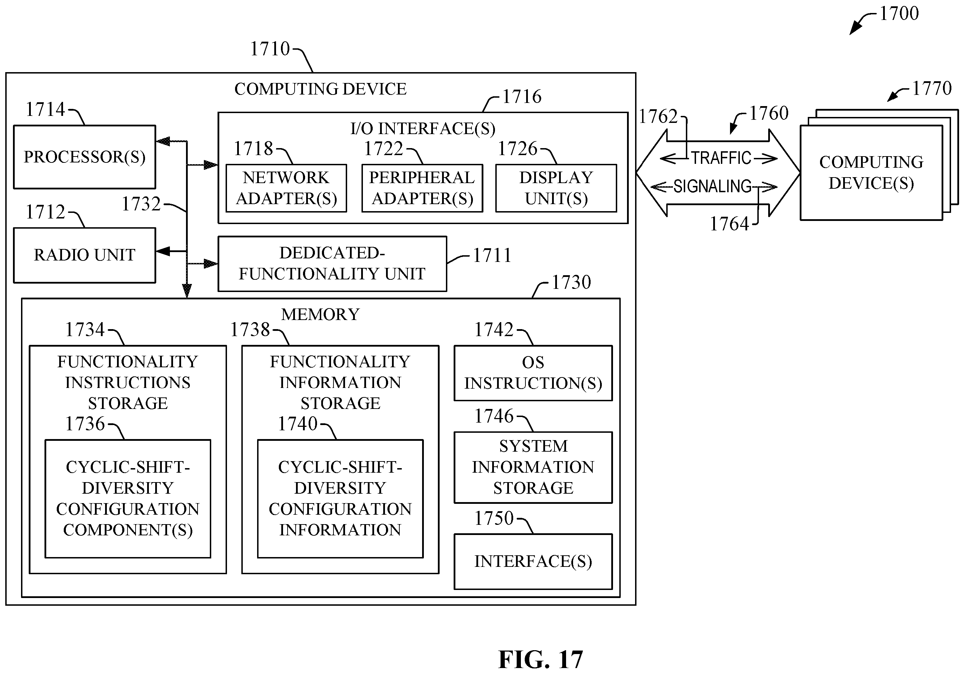

**FIG. 17** illustrates an example of a computational environment 1700 for wireless communication in accordance with one or more aspects of the disclosure. The example computational environment 1700 is only illustrative and is not intended to suggest or otherwise convey any limitation as to the scope of use or functionality of such computational environments' architecture. In addition, the computational environment 1700 should not be interpreted as having any dependency or requirement relating to any one or combination of components illustrated in this example computational environment. The illustrative computational environment 1700 can embody or can include, for example, the computing device 110, one or more of the base stations 114a, 114b, or 114c, and/or any other computing device (e.g., communication device 1510) that can implement or otherwise leverage the cyclic shift diversity features described herein.

The computational environment 1700 represents an example of a software implementation of the various aspects or features of the disclosure in which the processing or execution of operations described in connection with the cyclic shift diversity in wireless communications in accordance with aspects described herein can be performed in response to execution of one or more software components at the computing device 1710. It should be appreciated that the one or more software components can render the computing device 1710, or any other computing device that contains such components, a particular machine for cyclic shift diversity in wireless communication in accordance with aspects described herein, among other functional purposes. A software component can be embodied in or can comprise one or more computer-accessible instructions, e.g., computer-readable and/or computer-executable instructions. At least a portion of the computer-accessible instructions can embody one or more of the example techniques disclosed herein. For instance, to embody one such method, at least the portion of the computer-accessible instructions can be persisted (e.g., stored, made available, or stored and made available) in a computer storage non-transitory medium and executed by a processor. The one or more computer-accessible (or processor-accessible) instructions that embody a software component can be assembled into one or more program modules, for example, that can be compiled, linked, and/or executed at the computing device 1710 or other computing devices. Generally, such program modules comprise computer code, routines, programs, objects, components, information structures (e.g., data structures and/or metadata structures), etc., that can perform particular tasks (e.g., one or more operations) in response to execution by one or more processors, which can be integrated into the computing device 1710 or functionally coupled thereto.

The various example embodiments of the disclosure can be operational with numerous other general purpose or special purpose computing system environments or configurations. Examples of well-known computing systems, environments, and/or configurations that can be suitable for implementation of various aspects or features of the disclosure in connection with the cyclic shift diversity features can comprise personal computers; server computers; laptop devices; handheld computing devices, such as mobile tablets; wearable computing devices; and multiprocessor systems. Additional examples can include set top boxes, programmable consumer electronics, network PCs, minicomputers, mainframe computers, blade computers, programmable logic controllers, distributed computing environments that comprise any of the above systems or devices, and the like.

As illustrated, the computing device 1710 can comprise one or more processors 1714, one or more input/output (I/O) interfaces 1716, a memory 1730, and a bus architecture 1732 (also termed bus 1732) that functionally couples various functional elements of the computing device 1710. As illustrated, the computing device 1710 also can include a radio unit 1712. In one example, similarly to the radio unit 1514, the radio unit 1712 can include one or more antennas and a communication processing unit that can permit wireless communication between the computing device 1710 and another device, such as one of the computing device(s) 1770. The computing device 1710 also can include, in at least some embodiments, a dedicated functionality unit 1711 that can provide specific functionality to the computing device 1710, similarly to the dedicated functionality unit 1522 described hereinbefore. As such, the structure and at least some of the functional elements of the dedicated functionality unit 1711 can be similar to those of the dedicated functionality unit 1522. The bus 1732 can include at least one of a system bus, a memory bus, an address bus, or a message bus, and can permit exchange of information (data, metadata, and/or signaling) between the processor(s) 1714, the I/O interface(s) 1716, and/or the memory 1730, or respective functional element therein. In some scenarios, the bus 1732 in conjunction with one or more internal programming interfaces 1750 (also referred to as interface(s) 1750) can permit such exchange of information. In scenarios in which processor(s) 1714 include multiple processors, the computing device 1710 can utilize parallel computing.

The I/O interface(s) 1716 can permit or otherwise facilitate communication of information between the computing device and an external device, such as another computing device, e.g., a network element or an end-user device. Such communication can include direct communication or indirect communication, such as exchange of information between the computing device 1710 and the external device via a network or elements thereof. As illustrated, the I/O interface(s) 1716 can comprise one or more of network adapter(s) 1718, peripheral adapter(s) 1722, and display unit(s) 1726. Such adapter(s) can permit or facilitate connectivity between the external device and one or more of the processor(s) 1714 or the memory 1730. In one aspect, at least one of the network adapter(s) 1718 can couple functionally the computing device 1710 to one or more computing devices 1770 via one or more traffic and signaling pipes 1760 that can permit or facilitate exchange of traffic 1762 and signaling 1764 between the computing device 1710 and the one or more computing devices 1770. Such network coupling provided at least in part by the at least one of the network adapter(s) 1718 can be implemented in a wired environment, a wireless environment, or both. Therefore, it should be appreciated that in some embodiments, the functionality of the radio unit 1712 can be provided by a combination of at least one of the network adapter(s) 1718 and at least one of the processor(s) 1714. Accordingly, in such embodiments, the radio unit 1712 may not be included in the computing device 1710. The information that is communicated by the at least one network adapter can result from implementation of one or more operations in a method of the disclosure. Such output can be any form of visual representation, including, but not limited to, textual, graphical, animation, audio, tactile, and the like. In some scenarios, each of the computing device(s) 1770 can have substantially the same architecture as the computing device 1710. In addition or in the alternative, the display unit(s) 1726 can include functional elements (e.g., lights, such as light-emitting diodes; a display, such as liquid crystal display (LCD), combinations thereof, or the like) that can permit control of the operation of the computing device 1710, or can permit conveying or revealing operational conditions of the computing device 1710.

In one aspect, the bus 1732 represents one or more of several possible types of bus structures, including a memory bus or memory controller, a peripheral bus, an accelerated graphics port, and a processor or local bus using any of a variety of bus architectures. As an illustration, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI) bus, a PCI-Express bus, a Personal Computer Memory Card Industry Association (PCMCIA) bus, Universal Serial Bus (USB), and the like. The bus 1732, and all buses described herein can be implemented over a wired or wireless network connection and each of the subsystems, including the processor(s) 1714, the memory 1730 and memory elements therein, and the I/O interface(s) 1716 can be contained within one or more remote computing devices 1770 at physically separate locations, connected through buses of this form, in effect implementing a fully distributed system.

The computing device 1710 can comprise a variety of computer-readable media. Computer readable media can be any available media (transitory and non-transitory) that can be accessed by a computing device. In one aspect, computer-readable media can comprise computer non-transitory storage media (or computer-readable non-transitory storage media) and communications media. Example computer-readable non-transitory storage media can be any available media that can be accessed by the computing device 1710, and can comprise, for example, both volatile and non-volatile media, and removable and/or non-removable media. In one aspect, the memory 1730 can comprise computer-readable media in the form of volatile memory, such as random access memory (RAM), and/or non-volatile memory, such as read only memory (ROM).

The memory 1730 can comprise functionality instructions storage 1734 and functionality information storage 1738. The functionality instructions storage 1734 can comprise computer-accessible instructions that, in response to execution (by at least one of the processor(s) 1714), can implement one or more of the functionalities of the disclosure. The computer-accessible instructions can embody or can comprise one or more software components illustrated as CSD configuration component(s) 1736. In one scenario, execution of at least one component of the CSD configuration component(s) 1736 can implement one or more of the techniques disclosed herein. For instance, such execution can cause a processor that executes the at least one component to carry out a disclosed example method. It should be appreciated that, in one aspect, a processor of the processor(s) 1714 that executes at least one of the CSD configuration component(s) 1736 can access information from or retain information on one or more memory elements 1740 (collective referred to as CSD configuration information 1740) in the functionality information storage 1738 in order to operate in accordance with the functionality programmed or otherwise configured by the CSD configuration component(s) 1736. Such information can include at least one of code instructions, information structures, or the like. At least one of the one or more interfaces 1750 (e.g., application programming interface(s)) can permit or facilitate communication of information between two or more components within the functionality instructions storage 1734. The information that is communicated by the at least one interface can result from implementation of one or more operations in a method of the disclosure. In some embodiments, one or more of the functionality instructions storage 1734 and the functionality information storage 1738 can be embodied in or can comprise removable/non-removable, and/or volatile/non-volatile computer storage media.

At least a portion of at least one of the CSD configuration component(s) 1736 or CSD configuration information 1740 can program or otherwise configure one or more of the processors 1714 to operate at least in accordance with the functionality described herein. One or more of the processor(s) 1714 can execute at least one of such components and leverage at least a portion of the information in the storage 1738 in order to provide cyclic shift diversity in accordance with one or more aspects described herein. More specifically, yet not exclusively, execution of one or more of the component(s) 1736 can permit transmitting and/or receiving information at the computing device 1710, where the at least a portion of the information include one or more packets having preambles as described in connection with **FIGS. 2, 3, 5, 6,** and/or **10,** for example. As such, it should be appreciated that in some embodiments, a combination of the processor(s) 1714, the CSD configuration component(s) 1736, and the CSD configuration information 1740 can form means for providing specific functionality for cyclic shift diversity of wireless communications in accordance with one or more aspects of the disclosure.

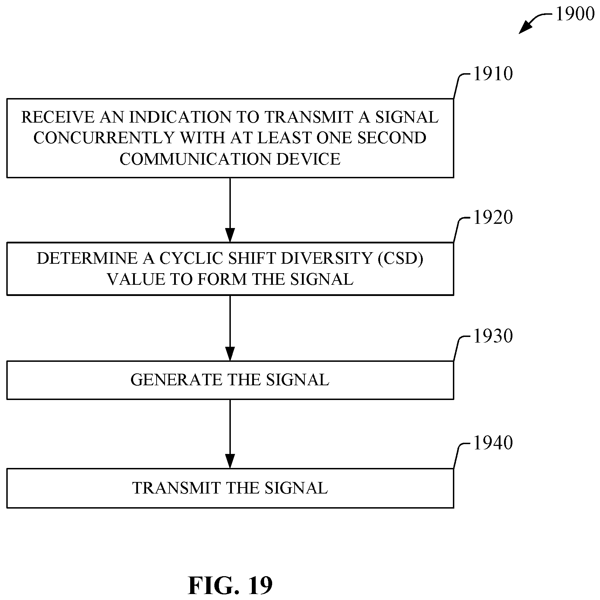

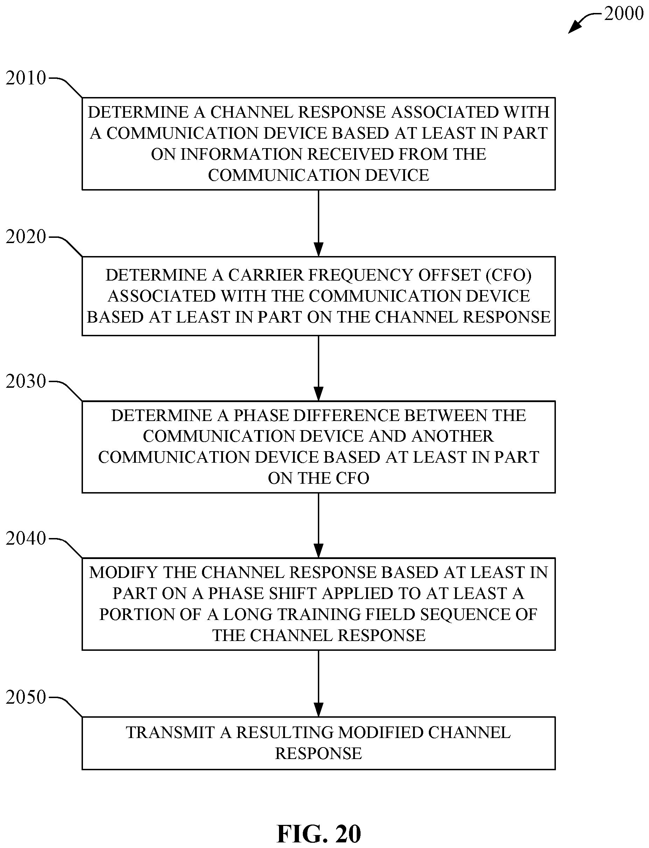

It should be appreciated that, in some scenarios, the functionality instruction(s) storage 1734 can embody or can comprise a computer-readable non-transitory storage medium having computer-accessible instructions that, in response to execution, cause at least one processor (e.g., one or more of processor(s) 1714) to perform operations of the various processes disclosed herein, including the example operations or blocks described in connection with the example method 1900 presented in **FIG. 19** and example method 2000 presented in **FIG. 20..**

In addition, the memory 1730 can comprise computer-accessible instructions and information (e.g., data and/or metadata) that permit or facilitate operation and/or administration (e.g., upgrades, software installation, any other configuration, or the like) of the computing device 1710. Accordingly, as illustrated, the memory 1730 can comprise a memory element 1742 (labeled OS instruction(s) 1742) that contains one or more program modules that embody or include one or more OSs, such as Windows operating system, Unix, Linux, Symbian, Android, Chromium, and substantially any OS suitable for mobile computing devices or tethered computing devices. In one aspect, the operational and/or architecture complexity of the computing device 1710 can dictate a suitable OS. The memory 1730 also comprises a system information storage 1746 having data and/or metadata that permits or facilitate operation and/or administration of the computing device 1710. Elements of the OS instruction(s) 1742 and the system information storage 1746 can be accessible or can be operated on by at least one of the processor(s) 1714.

It should be recognized that while the functionality instructions storage 1734 and other executable program components, such as the operating system instruction(s) 1742, are illustrated herein as discrete blocks, such software components can reside at various times in different memory components of the computing device 1710, and can be executed by at least one of the processor(s) 1714. In some scenarios, an implementation of the CSD configuration component(s) 1736 can be retained on or transmitted across some form of computer readable media.

The computing device 1710 and/or one of the computing device(s) 1770 can include a power supply (not shown), which can power up components or functional elements within such devices. The power supply can be a rechargeable power supply, e.g., a rechargeable battery, and it can include one or more transformers to achieve a power level suitable for operation of the computing device 1710 and/or one of the computing device(s) 1770, and components, functional elements, and related circuitry therein. In some scenarios, the power supply can be attached to a conventional power grid to recharge and ensure that such devices can be operational. In one aspect, the power supply can include an I/O interface (e.g., one of the network adapter(s) 1718) to connect operationally to the conventional power grid. In another aspect, the power supply can include an energy conversion component, such as a solar panel, to provide additional or alternative power resources or autonomy for the computing device 1710 and/or one of the computing device(s) 1770.

The computing device 1710 can operate in a networked environment by utilizing connections to one or more remote computing devices 1770. As an illustration, a remote computing device can be a personal computer, a portable computer, a server, a router, a network computer, a peer device or other common network node, and so on. As described herein, connections (physical and/or logical) between the computing device 1710 and a computing device of the one or more remote computing devices 1770 can be made via one or more traffic and signaling pipes 1760, which can comprise wireline link(s) and/or wireless link(s) and several network elements (such as routers or switches, concentrators, servers, and the like) that form a PAN, a LAN, a WAN, a WPAN, a WLAN, and/or a WWAN. Such networking environments are conventional and commonplace in dwellings, offices, enterprise-wide computer networks, intranets, local area networks, and wide area networks.

It should be appreciated that portions of the computing device 1710 can embody or can constitute an apparatus. For instance, at least one of the processor(s) 1714; at least a portion of the memory 1730, including a portion of CSD configuration component(s) 1736 and a portion of the CSD configuration information 1740; and at least a portion of the bus 1732 can embody or can constitute an apparatus that can operate in accordance with one or more aspects of this disclosure.

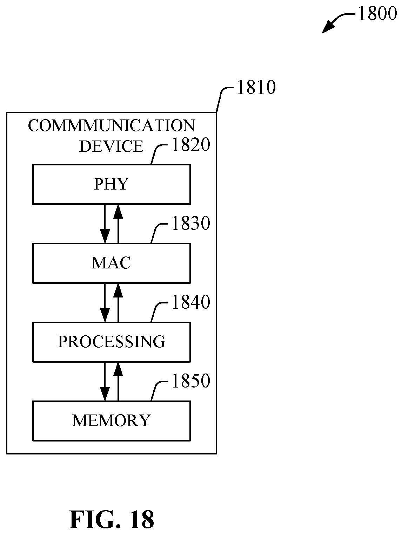

**FIG. 18** presents another example embodiment 1800 of a communication device 1810 in accordance with one or more embodiments of the disclosure. The communication device 1810 can embody or can include, for example, one of the communication devices 110a, 110b, 110c, or 110d; one or more of the base stations 114a, 114b, or 114c; and/or any other computing device (e.g., communication device 910) that implements or otherwise leverages the cyclic shift diversity features described herein. In some embodiments, the communication device 1810 can be a HEW-compliant device that may be configured to communicate with one or more other HEW devices and/or other types of communication devices, such as legacy communication devices. HEW devices and legacy devices also may be referred to as HEW stations (HEW STAs) and legacy STAs, respectively. In one implementation, the communication device 1810 can operate as an access point (such as AP 114a, 114b, or 114c). As illustrated, the communication device 1810 can include, among other things, physical layer (PHY) circuitry 1820 and medium-access-control layer (MAC) circuitry 1830. In one aspect, the PHY circuitry 1810 and the MAC circuitry 1830 can be HEW compliant layers and also can be compliant with one or more legacy IEEE 802.11 standards. In one aspect, the MAC circuitry 1830 can be arranged to configure physical layer converge protocol (PLCP) protocol data units (PPDUs) and arranged to transmit and receive PPDUs, among other things. In addition or in other embodiments, the communication device 1810 also can include other hardware processing circuitry 1840 (e.g., one or more processors) and one or more memory devices 1850 configured to perform the various operations described herein.

In some embodiments, the MAC circuitry 1830 can be arranged to contend for a wireless medium during a contention period to receive control of the medium for the HEW control period and configure an HEW PPDU. In addition or in other embodiments, the PHY circuitry 1820 can be arranged to transmit the HEW PPDU. The PHY circuitry 1820 can include circuitry for modulation/demodulation, upconversion/downconversion, filtering, amplification, etc. As such, the communication device 1810 can include a transceiver to transmit and receive data such as HEW PPDU. In some embodiments, the hardware processing circuitry 1840 can include one or more processors. The hardware processing circuitry 1840 can be configured to perform functions based on instructions being stored in a memory device (e.g., RAM or ROM) or based on special purpose circuitry. In some embodiments, the hardware processing circuitry 1840 can be configured to perform one or more of the functions described herein, such as allocating bandwidth or receiving allocations of bandwidth.

In some embodiments, one or more antennas may be coupled to or included in the PHY circuitry 1820. The antenna(s) can transmit and receive wireless signals, including transmission of HEW packets or other type of radio packets. As described herein, the one or more antennas can include one or more directional or omnidirectional antennas, including dipole antennas, monopole antennas, patch antennas, loop antennas, microstrip antennas or other types of antennas suitable for transmission of RF signals. In scenarios in which MIMO communication is utilized, the antennas may be physically separated to leverage spatial diversity and the different channel characteristics that may result.

The memory 1850 can retain or otherwise store information for configuring the other circuitry to perform operations for configuring and transmitting HEW packets or other types of radio packets, and performing the various operations described herein including, for example, determining a CSD value, configuring such a value, and forming an UL (or DL) transmission including the CSD value in accordance with one or more embodiments of this disclosure.

The communication device 1810 can be configured to communicate using OFDM communication signals over a multicarrier communication channel. More specifically, in some embodiments, the communication device 1810 can be configured to communicate in accordance with one or more specific radio technology protocols, such as the IEEE family of standards including IEEE 802.11, IEEE 802.11n, IEEE 802.11ac, IEEE 802.11ax, DensiFi, and/or proposed specifications for WLANs. In one of such embodiments, the communication device 1810 can utilize or otherwise rely on symbols having a duration that is four times the symbol duration of IEEE 802.11n and/or IEEE 802.11ac. It should be appreciated that the disclosure is not limited in this respect and, in some embodiments, the communication device 1810 also can transmit and/or receive wireless communications in accordance with other protocols and/or standards.

The communication device 1810 can be embodied in or can constitute a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), an access point, a base station, a transmit/receive device for a wireless standard such as IEEE 802.11 or IEEE 802.16, or other types of communication device that may receive and/or transmit information wirelessly. Similarly to the computing device 1710, the communication device 1810 can include, for example, one or more of a keyboard, a display, a non-volatile memory port, multiple antennas, a graphics processor, an application processor, speakers, and other mobile device elements. The display may be an LCD screen including a touch screen.

It should be appreciated that while the communication device 1810 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating or otherwise executing on one or more processors. It should further be appreciated that portions of the communication device 1810 can embody or can constitute an apparatus. For instance, the processing circuitry 1840 and the memory 1850 can embody or can constitute an apparatus that can operate in accordance with one or more aspects of this disclosure. The apparatus also can include functional elements (e.g., a bus architecture and/or API(s) as described herein) that can permit exchange of information between the processing circuitry 1840 and the memory 1850.

In view of the aspects described herein, various techniques for cyclic shift diversity in wireless communication (e.g., UL transmissions) having simultaneous common content from multiple communication devices that can operate according to different communication protocols can be implemented in accordance with the disclosure. Examples of such techniques can be better appreciated with reference, for example, to the flowcharts in **FIGS. 19-20.** For purposes of simplicity of explanation, the example method disclosed herein is presented and described as a series of blocks (with each block representing an action or an operation in a method, for example). However, it is to be understood and appreciated that the disclosed method is not limited by the order of blocks and associated actions or operations, as some blocks may occur in different orders and/or concurrently with other blocks from those that are shown and described herein. For example, the various methods (or processes or techniques) in accordance with this disclosure can be alternatively represented as a series of interrelated states or events, such as in a state diagram. Furthermore, not all illustrated blocks, and associated action(s), may be required to implement a method in accordance with one or more aspects of the disclosure. Further yet, two or more of the disclosed methods or processes can be implemented in combination with each other, to accomplish one or more features or advantages described herein.

It should be appreciated that the techniques of the disclosure can be retained on an article of manufacture, or computer-readable medium, to permit or facilitate transporting and transferring such methods to a computing device (e.g., a desktop computer; a mobile computer, such as a tablet, or a smartphone; a gaming console, a mobile telephone; a blade computer; a programmable logic controller, and the like) for execution, and thus implementation, by a processor of the computing device or for storage in a memory thereof or functionally coupled thereto. In one aspect, one or more processors, such as processor(s) that implement (e.g., execute) one or more of the disclosed techniques, can be employed to execute code instructions retained in a memory, or any computer- or machine-readable medium, to implement the one or more methods. The code instructions can provide a computer-executable or machine-executable framework to implement the techniques described herein.

**FIG. 19** presents a flowchart of an example method 1900 for wireless communication in accordance with one or more embodiments of the present disclosure. A communication device (e.g., a station device or an access point device) in accordance with aspects of the disclosure can implement (e.g., execute) the example method 1900 in its entirety or in part. For example, the communication device 910, the computing device 1110, or the communication device 1810 can implement one or more blocks of the subject example method. It should be appreciated that, in one aspect, the communication device can operate as a transmitter device (or a transmitter) when implementing the subject example method.

While illustrated with reference to a communication device, it should be appreciated that the subject example method 1900 also can be implemented by other types of apparatuses in accordance with one or more aspects of the present disclosure. For example, one of such apparatuses can include at least one memory device having programmed instructions encoded thereon and at least one processor functionally coupled to the at least one memory and configured to execute the programmed instructions, where in response to execution of the programmed instructions, the at least one processor can perform one or more blocks of the subject example method 1900.

At block 1910, an indication is received at a communication device (e.g., device 110a) or a component thereof, wherein the indication directs the communication device to transmit a signal concurrently with at least one second communication device (e.g., device 110b and/or device 110c). As described herein, in one example, the signal can be a legacy preamble. In another example, the signal can be CTS frame.

At block 1920, a CSD value can be determined in order to form the signal. In some embodiments, the communication device that receives the indication at block 1910 can determine the CSD value. As described herein, the CSD value can be determined for a specific antenna of the communication device. In some embodiments, in order to determine the CSD value, the communication device can receive the CSD value from an access point (e.g., AP 114a), and can configure the CSD value in order to generate the signal including the CSD value. In one aspect, the AP (e.g., AP 114a) can determine or otherwise supply a global CSD value for each communication device that can receive the CSD value. The communication device can process (e.g., modify) a received CSD value in order to achieve a more optimal or satisfactory value. In other embodiments, the communication device can select or otherwise determined a value from a table or other type of information structure configured within the communication device. In yet other embodiments, the communication device can determine select a random value within a predetermined range (e.g., from about 0 ns to about -200 ns) and can assign such a value to the CSD value.

At block 1930, the communication device can generate the signal. At block 1940, the communication device can transmit or otherwise send the signal. In one aspect, the communication device can transmit the signal in multiuser mode, concurrently with the at least one second communication device.

**FIG. 20** illustrates a flowchart of an example method 2000 for estimating a channel in accordance with one or more embodiments of the disclosure. The example method 2000 leverages a CSD-compatible LTF design in accordance with aspects described herein. A communication device (e.g., a station device or an access point device) in accordance with aspects of the disclosure can implement (e.g., execute) the example method 2000 in its entirety or in part. For example, the communication device 910, the computing device 1110, or the communication device 1210 can implement one or more blocks of the example method 2000. It is noted that, in some scenarios, the communication device can operate as a receiver device when implementing the example method 2000.

While illustrated with reference to a communication device, such as an AP device, the example method 2000 also can be implemented by other types of apparatuses (including processing circuitry and/or storage devices of various kinds) in accordance with one or more aspects of the present disclosure. For example, one of such apparatuses can include at least one memory device having programmed instructions encoded thereon and at least one processor functionally coupled to the at least one memory and configured to execute the programmed instructions, where in response to execution of the programmed instructions, the at least one processor can perform one or more blocks of the example method 2000.

At block 2010, a channel response associated with a communication device can be determined by another communication device, such as an AP device, based at least on information (e.g., signaling) received from the communication device. Determining the channel response can include detecting or otherwise identifying a long training field (LTF) sequence comprising one or more LTF symbols. At block 2020, a carrier frequency offset (CFO) associated with the communication device can be determined by the other communication device (e.g., the AP device) based at least in part on the channel response. At block 2030, a phase difference between the communication device and the other communication device can be determined by the other communication device based at least in part on the CFO. At block 2040, the channel response can be modified by the other communication device (e.g., the AP device) based at least in part on a phase shift applied to a portion of the LTF sequence. In one example, modifying the channel response can include adding the phase shift to the portion of the LTF sequence, where the phase shift can be equal to the determined phase difference. Implementing block 2040 can result in a modified channel response, and at block 2050, the other communication device can transmit the modified channel response.

According to examples of the disclosure, there may be an apparatus for wireless telecommunications. The apparatus may include at least one memory device having programmed instructions; and at least one processor functionally coupled to the at least one memory device and configured to execute the programmed instructions, and in response to execution of the programmed instructions, the at least one processor is further configured at least to: receive an indication to transmit a signal concurrently with at a least one second communication device; and determine a cyclic shift diversity (CSD) value to form the signal.

Implementation may include one or more of the following features. The CSD value of the apparatus may range from about 0 ns to about 200 ns. The apparatus may configure the at least one processor to generate and transmit the signal. The apparatus may further configure the at least one processor to receive scheduling information indicative of the CSD value, to configure the CSD to form the signal, and to select the CSD value from a predetermined information structure within a memory device of the at least one memory devices.

According to examples of the disclosure, there may be a method for wireless communications. The method may perform operations comprising: receiving, by a communication device comprising at least one processor and at least one memory device, an indication to transmit a signal concurrently with at a least one second communication device; and determining, by the communication device, a cyclic shift diversity (CSD) value to form the signal.

Implementation may include one or more of the following features. The method may further comprise generating and transmitting the signal. The method may further perform operations comprising receive scheduling information indicative of the CSD value, configuring the CSD to form the signal, and selecting the CSD value from a predetermined information structure within a memory device. Determining the CSD may further comprise assigning the CSD value to an antenna of the communication device.

According to examples of the disclosure, there may at least one computer-readable non-transitory storage medium. The at least one computer-readable non-transitory storage medium may have instructions encoded thereon that, in response to execution, cause at least one processor to perform operations comprising: receiving an indication to transmit a signal concurrently with at a least one second communication device; and determining a cyclic shift diversity (CSD) value to form the signal.

Implementation may include one or more of the following features. The CSD value of the at least one computer-readable non-transitory storage medium may range from about 0 ns to about 200 ns. The storage medium may perform operations comprising generating and transmitting the signal. The storage medium may further perform operations comprising receiving scheduling information indicative of the CSD value, configuring the CSD to form the signal, and selecting the CSD value from a predetermined information structure within a memory device of the at least one memory devices.

According to example embodiments of the disclosure, there may be an apparatus for wireless communications. The apparatus may perform operations comprising: means for receiving an indication to transmit a signal concurrently with at a least one second communication device; and means for determining a cyclic shift diversity (CSD) value to form the signal.

Implementation may include one or more of the following features. The CSD value of the apparatus may range from about 0 ns to about 200 ns. The apparatus may perform operations comprising means for generating and means for transmitting the signal. The storage medium may further perform at least one of the operations comprising means for receiving scheduling information indicative of the CSD value, means for configuring the CSD to form the signal, and means for selecting the CSD value from a predetermined information structure within a memory device.

According to examples of the disclosure, there may be a non-transitory computer readable medium. The non-transitory computer readable medium, including instructions stored thereon, when executed by one or more processor(s) of an access point, may cause the device to perform operations of: identifying a channel response received from and associated with the wireless communication station, wherein the channel response comprises a long training field (LTF) sequence comprising one or more LTF symbol; calculating a carrier frequency offset (CFO) of the wireless communication station based at least in part on the channel response; determining a phase difference between the access point and the wireless communication based at least in part on the calculated CFO; adding a first phase shift in a first direction to at least a portion of the LTF sequence based at least in part on the determined phase difference, thereby resulting in a modified channel response; and causing to transmit to the wireless communication station the modified channel response.

Implementation may include one or more of the following features. For the non-transitory computer readable medium, adding a first phase shift in a first direction to at least of portion of the LTF sequence may comprise at least one of adding a second phase shift in a second direction to at least a portion of the LTF sequence, wherein the second phase shift is equal to the first phase shift, and wherein the second direction is opposite the first direction and assigning the first phase shift to the wireless communication station. The medium may calculate the CFO of the wireless communication station using at least one of a zero-forcing minimum mean-square error (MMSE) receiver of the access point. The determined phase difference may be stored in a lookup table upon determination and later recalled from the lookup table. The medium may transmit the channel response to the wireless communication station over an uplink multi-user multiple input multiple output (UL MU-MIMO) wireless communication network. The medium transmitting the modified channel response may comprise establishing a secure wireless connection between the access point and the wireless communication station.

According to examples of the disclosure, there may be a method. The method may comprise: identifying a channel response received from and associated with the wireless communication station, wherein the channel response comprises a long training field (LTF) sequence comprising one or more LTF symbol; calculating a carrier frequency offset (CFO) of the wireless communication station based at least in part on the channel response; determining a phase difference between the access point and the wireless communication based at least in part on the calculated CFO; adding a first phase shift in a first direction to at least a portion of the LTF sequence based at least in part on the determined phase difference, thereby resulting in a modified channel response; and causing to transmit to the wireless communication station the modified channel response.

Implementation may include one or more of the following features. For the method, adding a first phase shift in a first direction to at least of portion of the LTF sequence may comprise at least one of adding a second phase shift in a second direction to at least a portion of the LTF sequence, wherein the second phase shift is equal to the first phase shift, and wherein the second direction is opposite the first direction and assigning the first phase shift to the wireless communication station. The method may calculate the CFO of the wireless communication station using at least one of a zero-forcing minimum mean-square error (MMSE) receiver of the access point. The determined phase difference may be stored in a lookup table upon determination and later recalled from the lookup table. The method may transmit the channel response to the wireless communication station over an uplink multi-user multiple input multiple output (UL MU-MIMO) wireless communication network. The method transmitting the modified channel response may comprise establishing a secure wireless connection between the access point and the wireless communication station.

According to examples of the disclosure, there may be an apparatus. The apparatus may comprise: means for identifying a channel response received from and associated with the wireless communication station, wherein the channel response comprises a long training field (LTF) sequence comprising one or more LTF symbol; means for calculating a carrier frequency offset (CFO) of the wireless communication station based at least in part on the channel response; means for determining a phase difference between the access point and the wireless communication based at least in part on the calculated CFO; means for adding a first phase shift in a first direction to at least a portion of the LTF sequence based at least in part on the determined phase difference, thereby resulting in a modified channel response; and means for causing to transmit to the wireless communication station the modified channel response.

Implementation may include one or more of the following features. For the apparatus, means for adding a first phase shift in a first direction to at least of portion of the LTF sequence may comprise at least one of adding a second phase shift in a second direction to at least a portion of the LTF sequence, wherein the second phase shift is equal to the first phase shift, and wherein the second direction is opposite the first direction and assigning the first phase shift to the wireless communication station. The apparatus may calculate the CFO of the wireless communication station using at least one of a zero-forcing minimum mean-square error (MMSE) receiver of the access point. The determined phase difference may be stored in a lookup table upon determination and later recalled from the lookup table. The apparatus may transmit the channel response to the wireless communication station over an uplink multi-user multiple input multiple output (UL MU-MIMO) wireless communication network. The apparatus means for transmitting the modified channel response may comprise establishing a secure wireless connection between the access point and the wireless communication station.

According to examples of the disclosure, there may be a system. The system may comprise a memory and a processor configured to execute one or more instructions stored in memory that cause the processor to: identify a channel response received from and associated with the wireless communication station, wherein the channel response comprises a long training field (LTF) sequence comprising one or more LTF symbol; calculate a carrier frequency offset (CFO) of the wireless communication station based at least in part on the channel response; determine a phase difference between the access point and the wireless communication based at least in part on the calculated CFO; add a first phase shift in a first direction to at least a portion of the LTF sequence based at least in part on the determined phase difference, thereby resulting in a modified channel response; and cause to transmit to the wireless communication station the modified channel response.

Various embodiments of the disclosure may take the form of an entirely or partially hardware embodiment, an entirely or partially software embodiment, or a combination of software and hardware (e.g., a firmware embodiment). Furthermore, as described herein, various embodiments of the disclosure (e.g., methods and systems) may take the form of a computer program product comprising a computer-readable non-transitory storage medium having computer-accessible instructions (e.g., computer-readable and/or computer-executable instructions) such as computer software, encoded or otherwise embodied in such storage medium. Those instructions can be read or otherwise accessed and executed by one or more processors to perform or permit performance of the operations described herein. The instructions can be provided in any suitable form, such as source code, compiled code, interpreted code, executable code, static code, dynamic code, assembler code, combinations of the foregoing, and the like. Any suitable computer-readable non-transitory storage medium may be utilized to form the computer program product. For instance, the computer-readable medium may include any tangible non-transitory medium for storing information in a form readable or otherwise accessible by one or more computers or processor(s) functionally coupled thereto. Non-transitory storage media can include read only memory (ROM); random access memory (RAM); magnetic disk storage media; optical storage media; flash memory, etc.

Embodiments of the operational environments and techniques (procedures, methods, processes, and the like) are described herein with reference to block diagrams and flowchart illustrations of methods, systems, apparatuses and computer program products. It can be understood that each block of the block diagrams and flowchart illustrations, and combinations of blocks in the block diagrams and flowchart illustrations, respectively, can be implemented by computer-accessible instructions. In some implementations, the computer-accessible instructions may be loaded or otherwise incorporated into a general purpose computer, special purpose computer, or other programmable information processing apparatus to produce a particular machine, such that the operations or functions specified in the flowchart block or blocks can be implemented in response to execution at the computer or processing apparatus.

Unless otherwise expressly stated, it is in no way intended that any protocol, procedure, process, or method set forth herein be construed as requiring that its acts or steps be performed in a specific order. Accordingly, where a process or method claim does not actually recite an order to be followed by its acts or steps or it is not otherwise specifically recited in the claims or descriptions of the subject disclosure that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification or annexed drawings, or the like.

As used in this application, the terms "component," "environment," "system," "architecture," "interface," "unit," "engine," "platform," "module," and the like are intended to refer to a computer-related entity or an entity related to an operational apparatus with one or more specific functionalities. Such entities may be either hardware, a combination of hardware and software, software, or software in execution. As an example, a component may be, but is not limited to being, a process running on a processor, a processor, an object, an executable portion of software, a thread of execution, a program, and/or a computing device. For example, both a software application executing on a computing device and the computing device can be a component. One or more components may reside within a process and/or thread of execution. A component may be localized on one computing device or distributed between two or more computing devices. As described herein, a component can execute from various computer-readable non-transitory media having various data structures stored thereon. Components can communicate via local and/or remote processes in accordance, for example, with a signal (either analogic or digital) having one or more data packets (e.g., data from one component interacting with another component in a local system, distributed system, and/or across a network such as a wide area network with other systems via the signal). As another example, a component can be an apparatus with specific functionality provided by mechanical parts operated by electric or electronic circuitry that is controlled by a software application or firmware application executed by a processor, wherein the processor can be internal or external to the apparatus and can execute at least a part of the software or firmware application. As yet another example, a component can be an apparatus that provides specific functionality through electronic components without mechanical parts, the electronic components can include a processor therein to execute software or firmware that confers at least in part the functionality of the electronic components. An interface can include input/output (I/O) components as well as associated processor, application, and/or other programming components. The terms "component," "environment," "system," "architecture," "interface," "unit," "engine," "platform," "module" can be utilized interchangeably and can be referred to collectively as functional elements.

In the present specification and annexed drawings, reference to a "processor" is made. As utilized herein, a processor can refer to any computing processing unit or device comprising single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit (IC), an application-specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. A processor can be implemented as a combination of computing processing units. In some embodiments, processors can utilize nanoscale architectures such as, but not limited to, molecular and quantum-dot based transistors, switches and gates, in order to optimize space usage or enhance performance of user equipment.

In addition, in the present specification and annexed drawings, terms such as "store," storage," "data store," "data storage," "memory," "repository," and substantially any other information storage component relevant to operation and functionality of a component of the disclosure, refer to "memory components," entities embodied in a "memory," or components forming the memory. It can be appreciated that the memory components or memories described herein embody or comprise non-transitory computer storage media that can be readable or otherwise accessible by a computing device. Such media can be implemented in any methods or technology for storage of information such as computer-readable instructions, information structures, program modules, or other information objects. The memory components or memories can be either volatile memory or non-volatile memory, or can include both volatile and non-volatile memory. In addition, the memory components or memories can be removable or non-removable, and/or internal or external to a computing device or component. Example of various types of non-transitory storage media can comprise hard-disc drives, zip drives, CD-ROM, digital versatile disks (DVD) or other optical storage, magnetic cassettes, magnetic tape, magnetic disk storage or other magnetic storage devices, flash memory cards or other types of memory cards, cartridges, or any other non-transitory medium suitable to retain the desired information and which can be accessed by a computing device.

As an illustration, non-volatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), and direct Rambus RAM (DRRAM). The disclosed memory components or memories of operational environments described herein are intended to comprise one or more of these and/or any other suitable types of memory.

Conditional language, such as, among others, "can," "could," "might," or "may," unless specifically stated otherwise, or otherwise understood within the context as used, is generally intended to convey that some implementations could include, while other implementations do not include, some features, elements, and/or operations. Thus, such conditional language generally is not intended to imply that features, elements, and/or operations are in any way required for one or more implementations or that one or more implementations necessarily include logic for deciding, with or without user input or prompting, whether these features, elements, and/or operations are included or are to be performed in any particular implementation.

What has been described herein in the present specification and annexed drawings includes examples of systems, devices, techniques, and computer program products that can provide cyclic shift diversity for wireless communications (e.g., UL transmissions) having a common content communicated simultaneously from multiple communication devices that can operate according to different communication protocols (e.g. a new protocol and a legacy protocol). It is, of course, not possible to describe every conceivable combination of elements and/or methods for purposes of describing the various features of the disclosure, but it can be recognized that many further combinations and permutations of the disclosed features are possible. Accordingly, it may be apparent that various modifications can be made to the disclosure without departing from the scope thereof. In addition or in the alternative, other embodiments of the disclosure may be apparent from consideration of the specification and annexed drawings, and practice of the disclosure as presented herein. It is intended that the examples put forward in the specification and annexed drawings be considered,

## EP 3 262 767 B1

in all respects, as illustrative and not restrictive. Although specific terms are employed herein, they are used in a generic and descriptive sense only and not for purposes of limitation.

**Claims**

1. A device (1510) for determining a cyclic shift diversity, CSD, value for a wireless transmission, the device comprising storage (1530) and processing circuitry (624) configured to:

   identify a first high efficiency, HE, frame received from an access point (114), **characterized in that** the first HE frame comprises an indication of the CSD value of a second high efficiency, HE, frame, the indication provided in a high efficiency signal-B, HE-SIG-B, field of the first HE frame;
   determine the CSD value based on the indication; and
   cause to send the second HE frame in a spatial stream using the CSD value.

2. The device (1510) of claim 1, wherein the CSD value applies to a training field of the second HE frame.

3. The device (1510) of claim 1, wherein the indication of the CSD value is a first indication of a first CSD value wherein the spatial stream is a first spatial stream, and
   wherein the frame received from the access point further comprises a second indication of a second CSD value for a second spatial stream.

4. The device (1510) of claim 3, wherein to cause to send the HE frame comprises the storage (1530) and processing circuitry (624) being further configured to cause to send the second HE frame using a first antenna (1516), wherein the storage (1530) and processing circuitry (624) are further configured to cause to send a third HE frame using a second antenna and the second CSD value.

5. The device (1510) of claim 1, wherein the CSD value applies to a frequency, wherein to cause to send the second HE frame comprises the storage (1530) and processing circuitry (624) being further configured to cause to send the second HE frame using the frequency.

6. The device (1510) of claim 1, wherein the frame received from the access point (114) further comprises a trigger frame (210) indicating scheduling information, wherein to cause to send the second HE frame comprises the storage (1510) and processing circuitry (624) being further configured to cause to send the second HE frame according to the scheduling information.

7. The device (1510) of claim 1, further comprising a transceiver (1604) configured to transmit and receive wireless signals.

8. The device (1510) of claim 7, further comprising one or more antennas (1516) coupled to the transceiver (1604).

9. A method performed at an access point comprising:

   determining a first cyclic shift diversity, CSD, value and a second CSD value, wherein the first CSD value applies to a first uplink transmission, and wherein the second CSD value applies to a second uplink transmission;
   generating a high efficiency, HE, frame comprising a first indication of the first CSD value and a second indication of a second CSD value, the first indication and second indication provided in a high efficiency signal-B, HE-SIG-B, field of the frame;

   causing to send the HE frame; and
   identifying the first uplink transmission received according to the first CSD value.

10. The method of claim 9, wherein the first CSD value applies to a training field of the first uplink transmission.

11. The method of claim 9, wherein identifying the first uplink transmission comprises identifying the first uplink transmission received in a first spatial stream, the operations comprising identifying the second uplink transmission received according to the second CSD value in a second spatial stream.

12. The method of claim 11, wherein identifying the first uplink transmission comprises identifying the first uplink transmission received from a first station device (920), and wherein identifying the second uplink transmission comprises identifying the second uplink transmission received from a second station device (930); or
wherein identifying the first uplink transmission comprises identifying the first uplink transmission received from a first antenna (1516) of a station device (1510), and wherein identifying the second uplink transmission comprises identifying the second uplink transmission received from a second antenna of the station device (1810).

13. A method (1900) for determining a cyclic shift diversity, CSD, value for a wireless transmission at a station device, the method comprising:

identifying, by one or more processors (624) of the station device (1510), a first high efficiency, HE, frame received from an access point, **characterized in that** the first HE frame comprises an indication of the CSD value of a second high efficiency, HE, frame, the indication provided in a high efficiency signal-B, HE-SIG-B, field of the first HE frame;
determining (1920), by the one or more processors (624), the CSD value based on the indication; and
causing to send (1930), by the one or more processors (624), the second HE frame in a spatial stream using the CSD value.

14. The method (1900) of claim 13, wherein the CSD value applies to a training field of the second HE frame.

15. A computer program product comprising computer program code that, when executed by a processor, implements the method according to any of claims 9 to 14.

**Patentansprüche**

1. Vorrichtung (1510) zum Ermitteln eines Werts einer zyklischen Verschiebungsdiversität, CSD-Werts, für eine drahtlose Übertragung, wobei die Vorrichtung eine Speicher- (1530) und Verarbeitungsschaltungsanordnung (624) umfasst, die konfiguriert ist zum:

Identifizieren eines ersten Hochleistungsframes, HE-Frames, der von einem Zugangspunkt (114) empfangen wird, **dadurch gekennzeichnet, dass** der erste HE-Frame eine Anzeige des CSD-Werts eines zweiten Hochleistungsframes, HE-Frames, umfasst, wobei die Anzeige in einem Feld eines Hochleistungssignals-B, HE-SIG-B-Feld, des ersten HE-Frames bereitgestellt wird;
Ermitteln des CSD-Werts basierend auf der Anzeige; und
Veranlassen, dass der zweite HE-Frame in einem räumlichen Strom unter Verwendung des CSD-Werts gesendet wird.

2. Vorrichtung (1510) nach Anspruch 1, wobei der CSD-Wert auf ein Trainingsfeld des zweiten HE-Frames angewandt wird.

3. Vorrichtung (1510) nach Anspruch 1, wobei die Anzeige des CSD-Werts eine erste Anzeige eines ersten CSD-Werts ist, wobei der räumliche Strom ein erster räumlicher Strom ist und wobei der Frame, der von dem Zugangspunkt empfangen wurde, ferner eine zweite Anzeige von einem zweiten CSD-Wert für einen zweiten räumlichen Strom umfasst.

4. Vorrichtung (1510) nach Anspruch 3, wobei das Veranlassen zum Senden des HE-Frames umfasst, dass die Speicher- (1530) und Verarbeitungsschaltungsanordnung (624) ferner konfiguriert ist, um zu veranlassen, dass der zweite HE-Frame unter Verwendung einer ersten Antenne (1516) gesendet wird, wobei die Speicher- (1530) und Verarbeitungsschaltungsanordnung (624) ferner konfiguriert ist, um zu veranlassen, dass ein dritter HE-Frame unter Verwendung einer zweiten Antenne und des zweiten CSD-Werts gesendet werden.

5. Vorrichtung (1510) nach Anspruch 1, wobei der CSD-Wert auf eine Frequenz angewandt wird, wobei das Veranlassen zum Senden des zweiten HE-Frames umfasst, dass die Speicher- (1530) und Verarbeitungsschaltungsanordnung (624) ferner konfiguriert ist, um zu veranlassen, dass der zweite HE-Frame unter Verwendung der Frequenz gesendet wird.

6. Vorrichtung (1510) nach Anspruch 1, wobei der Frame, der von dem Zugangspunkt (114) empfangen wurde, ferner einen Triggerframe (210) umfasst, der Planungsinformationen anzeigt, wobei das Veranlassen zum Senden des zweiten HE-Frames umfasst, dass die Speicher-(1510) und Verarbeitungsschaltungsanordnung (624) ferner konfiguriert ist, um zu veranlassen, dass der zweite HE-Frame gemäß den Planungsinformationen gesendet wird.

7. Vorrichtung (1510) nach Anspruch 1, die ferner einen Transceiver (1604) umfasst, der zum Übertragen und Empfangen von drahtlosen Signalen konfiguriert ist.

8. Vorrichtung (1510) nach Anspruch 7, die ferner eine oder mehrere Antennen (1516) umfasst, die mit dem Transceiver (1604) gekoppelt sind.

9. Verfahren, das an einem Zugangspunkt durchgeführt wird, umfassend:

Ermitteln eines ersten Werts einer zyklischen Verschiebungsdiversität, CSD-Werts, und eines zweiten CSD-Werts, wobei der erste CSD-Wert auf eine erste Uplink-Übertragung angewandt wird und wobei der zweite CSD-Wert auf eine zweite Uplink-Übertragung angewandt wird;
Erzeugen eines Hochleistungsframes, HE-Frames, der eine erste Anzeige des ersten CSD-Werts und eine zweite Anzeige des zweiten CSD-Werts umfasst, wobei die erste Anzeige und die zweite Anzeige in einem Feld eines Hochleistungssignals-B, HE-SIG-B-Feld, des Frames bereitgestellt werden;
Veranlassen zum Senden des HE-Frames; und
Identifizieren der ersten Uplink-Übertragung, die gemäß dem ersten CSD-Wert empfangen wird.

10. Verfahren nach Anspruch 9, wobei der erste CSD-Wert auf ein Trainingsfeld der ersten Uplink-Übertragung angewandt wird.

11. Verfahren nach Anspruch 9, wobei das Identifizieren der ersten Uplink-Übertragung ein Identifizieren der ersten Uplink-Übertragung umfasst, die in einem ersten räumlichen Strom empfangen wurde, wobei die Operationen ein Identifizieren der zweiten Uplink-Übertragung, die gemäß dem zweiten CSD-Wert in einem zweiten räumlichen Strom empfangen wird.

12. Verfahren nach Anspruch 11, wobei das Identifizieren der ersten Uplink-Übertragung ein Identifizieren der ersten Uplink-Übertragung umfasst, die von einer ersten Stationsvorrichtung (920) empfangen wurde, und wobei das Identifizieren der zweiten Uplink-Übertragung ein Identifizieren der zweiten Uplink-Übertragung umfasst, die von einer zweiten Stationsvorrichtung (930) empfangen wurde; oder
wobei das Identifizieren der ersten Uplink-Übertragung ein Identifizieren der ersten Uplink-Übertragung umfasst, die von einer ersten Antenne (1516) einer Stationsvorrichtung (1510) empfangen wurde, und wobei das Identifizieren der zweiten Uplink-Übertragung ein Identifizieren der zweiten Uplink-Übertragung umfasst, die von einer zweiten Antenne der Stationsvorrichtung (1810) empfangen wurde.

13. Verfahren (1900) zum Ermitteln eines Werts einer zyklischen Verschiebungsdiversität, CSD-Werts, für eine drahtlose Übertragung in einer Stationsvorrichtung, wobei das Verfahren umfasst:

Identifizieren, durch einen oder mehrere Prozessoren (624) der Stationsvorrichtung (1510), eines ersten Hochleistungsframes, HE-Frames, der von einem Zugangspunkt empfangen wird, **dadurch gekennzeichnet, dass** der erste HE-Frame eine Anzeige des CSD-Werts eines zweiten Hochleistungsframes, HE-Frames, umfasst, wobei die Anzeige in einem Feld eines Hochleistungssignals-B, HE-SIG-B-Feld, des ersten HE-Frames bereitgestellt wird;
Ermitteln (1920), durch den einen oder die mehreren Prozessoren (624), des CSD-Werts basierend auf der Anzeige; und
Veranlassen zum Senden (1930), durch den einen oder die mehreren Prozessoren (624), des zweiten HE-Frames in einem räumlichen Strom unter Verwendung des CSD-Werts.

14. Verfahren (1900) nach Anspruch 13, wobei der CSD-Wert auf ein Trainingsfeld des zweiten HE-Frames angewandt wird.

15. Computerprogrammprodukt, das einen Computerprogrammcode umfasst, der, wenn er von einem Prozessor ausgeführt wird, das Verfahren nach einem der Ansprüche 9 bis 14 implementiert.

**Revendications**

1. Dispositif (1510) permettant de déterminer une valeur de diversité de décalage cyclique, CSD, pour une transmission sans fil, le dispositif comprenant une mémoire (1530) et des circuits de traitement (624) configurés pour :

   identifier une première trame à haute efficacité, HE, reçue d'un point d'accès (114), **caractérisé en ce que** la première trame HE comprend une indication de la valeur CSD d'une deuxième trame à haute efficacité, HE, l'indication étant fournie dans un champ de signal-B à haute efficacité, HE-SIG-B, de la première trame HE ;
   déterminer la valeur CSD à partir de l'indication ; et
   commander l'envoi de la deuxième trame HE dans un flux spatial en utilisant la valeur CSD.

2. Dispositif (1510) selon la revendication 1, dans lequel la valeur CSD s'applique à un champ d'entraînement de la deuxième trame HE.

3. Dispositif (1510) selon la revendication 1, dans lequel l'indication de la valeur CSD est une première indication d'une première valeur CSD, dans lequel le flux spatial est un premier flux spatial, et dans lequel la trame reçue du point d'accès comprend en outre une deuxième indication d'une deuxième valeur CSD pour un deuxième flux spatial.

4. Dispositif (1510) selon la revendication 3, dans lequel la commande de l'envoi de la trame HE comprend le fait que la mémoire (1530) et les circuits de traitement (624) soient en outre configurés pour commander l'envoi de la deuxième trame HE au moyen d'une première antenne (1516), la mémoire (1530) et les circuits de traitement (624) étant en outre configurés pour commander l'envoi d'une troisième trame HE au moyen d'une deuxième antenne et de la deuxième valeur CSD.

5. Dispositif (1510) selon la revendication 1, dans lequel la valeur CSD s'applique à une fréquence, dans lequel la commande de l'envoi de la deuxième trame HE comprend le fait que la mémoire (1530) et les circuits de traitement (624) soient en outre configurés pour commander l'envoi de la deuxième trame HE en utilisant la fréquence.

6. Dispositif (1510) selon la revendication 1, dans lequel la trame reçue du point d'accès (114) comprend en outre une trame de déclenchement (210) indiquant des informations de planification, dans lequel la commande de l'envoi de la deuxième trame HE comprend le fait que la mémoire (1510) et les circuits de traitement (624) soient en outre configurés pour commander l'envoi de la deuxième trame HE en fonction des informations de planification.

7. Dispositif (1510) selon la revendication 1, comprenant en outre un émetteur-récepteur (1604) configuré pour émettre et recevoir des signaux sans fil.

8. Dispositif (1510) selon la revendication 7, comprenant en outre une ou plusieurs antennes (1516) couplées à l'émetteur-récepteur (1604).

9. Procédé exécuté au niveau d'un point d'accès comprenant :

   la détermination d'une première valeur de diversité de décalage cyclique, CSD, et d'une deuxième valeur CSD, la première valeur CSD s'appliquant à une première transmission de liaison montante, et la deuxième valeur CSD s'appliquant à une deuxième transmission de liaison montante ;
   la génération d'une trame à haute fréquence, HE, comprenant une première indication de la première valeur CSD et une deuxième indication d'une deuxième valeur CSD, la première indication et la deuxième indication étant fournies dans un champ de signal-B à haute efficacité, HE-SIG-B, de la trame ;
   la commande de l'envoi de la trame HE ; et
   l'identification de la première transmission de liaison montante reçue en fonction de la première valeur CSD.

10. Procédé selon la revendication 9, dans lequel la première valeur CSD s'applique à un champ d'entraînement de la première transmission de liaison montante.

11. Procédé selon la revendication 9, dans lequel l'identification de la première transmission de liaison montante comprend l'identification de la première transmission de liaison montante reçue dans un premier flux spatial, les opérations comprenant l'identification de la deuxième transmission de liaison montante reçue en fonction de la deuxième valeur de CSD dans un deuxième flux spatial.

**12.** Procédé de la revendication 11, dans lequel l'identification de la première transmission de liaison montante comprend l'identification de la première transmission de liaison montante reçue d'un premier dispositif de station (920), et dans lequel l'identification de la deuxième transmission de liaison montante comprend l'identification de la deuxième transmission de liaison montante reçue en provenance d'un deuxième dispositif de station (930) ; ou

dans lequel l'identification de la première transmission de liaison montante comprend l'identification de la première transmission de liaison montante reçue d'une première antenne (1516) d'un dispositif de station (1510), et dans lequel l'identification de la deuxième transmission de liaison montante comprend l'identification de la deuxième transmission de liaison montante reçue d'une deuxième antenne du dispositif de station (1810).

**13.** Procédé (1900) de détermination d'une valeur de diversité de décalage cyclique, CSD, pour une transmission sans fil au niveau d'un dispositif de station, le procédé comprenant :

l'identification, par un ou plusieurs processeurs (624) du dispositif de station (1510), d'une première trame à haute efficacité, HE, reçue d'un point d'accès, **caractérisé en ce que** la première trame HE comprend une indication de la valeur CSD d'une deuxième trame à haute efficacité, HE, l'indication étant fournie dans un champ de signal-B à haute efficacité, HE-SIG-B, de la première trame HE ;
la détermination (1920), par les un ou plusieurs processeurs (624), de la valeur CSD à partir de l'indication ; et
la commande de l'envoi (1930), par les un ou plusieurs processeurs (624), de la deuxième trame HE dans un flux spatial en utilisant la valeur CSD.

**14.** Procédé (1900) selon la revendication 13, dans lequel la valeur CSD s'applique à un champ d'entraînement de la deuxième trame HE.

**15.** Produit de programme informatique comprenant un code de programme informatique qui, lorsqu'il est exécuté par un processeur, met en œuvre le procédé selon l'une quelconque des revendications 9 à 14.

**FIG. 1**

**Channel Bandwidth Δ**

*AP Device*

$\delta_1$

$\delta_2$

$\delta_3$

$\delta_4$

Frequency

210

Trigger
Frame

220

Common
Legacy
Preamble

| HE-Preamble 230a | Data 240a |
| HE-Preamble 230b | Data 240b |
| HE-Preamble 230c | Data 240c |
| HE-Preamble 230d | Data 240d |

Time

**FIG. 2**

**Channel Bandwidth Δ**

*AP Device*  *MU-CTS Phase*  *AP Device*

$\delta_1$

$\delta_2$

$\delta_3$

$\delta_4$

Frequency

310

MU-RTS

320

Common
CTS
Transmission

330

Preamble with DL Resource Allocation

| Data 340a |
| Data 340b |
| Data 340c |
| Data 340d |

Time

**FIG. 3**

FIG. 4

**FIG. 5**

**FIG. 6**

**FIG. 7A**

**FIG. 7B**

Equal Delay Zones

Delay Zone 1       Delay Zone 2

U1   U2   U3     U1   U2   U3

Time

**FIG. 8A**

Different Delay Zones

Delay Zone 1       Delay Zone 2

U1   U2   U3     U1 U2 U3

Time

**FIG. 8B**

FIG. 9

Example P Matrix

$$\begin{bmatrix} 1 & -1 & 1 & 1 \\ 1 & 1 & -1 & 1 \\ 1 & 1 & 1 & -1 \\ -1 & 1 & 1 & 1 \end{bmatrix}$$

Frequency

LTF Sequence of Stream $k$

| | | | |
|---|---|---|---|
| $S_1(k)\ C_1(k)$ | $S_1(k)\ C_2(k)$ | $S_1(k)\ C_3(k)$ | $S_1(k)\ C_4(k)$ |
| $S_2(k)\ C_1(k)$ | $S_2(k)\ C_2(k)$ | $S_2(k)\ C_3(k)$ | $S_2(k)\ C_4(k)$ |
| $S_3(k)\ C_1(k)$ | $S_3(k)\ C_2(k)$ | $S_3(k)\ C_3(k)$ | $S_3(k)\ C_4(k)$ |
| $S_4(k)\ C_1(k)$ | $S_4(k)\ C_2(k)$ | $S_4(k)\ C_3(k)$ | $S_4(k)\ C_4(k)$ |
| $S_5(k)\ C_1(k)$ | $S_5(k)\ C_2(k)$ | $S_5(k)\ C_3(k)$ | $S_5(k)\ C_4(k)$ |
| $S_6(k)\ C_1(k)$ | $S_6(k)\ C_2(k)$ | $S_6(k)\ C_3(k)$ | $S_6(k)\ C_4(k)$ |
| $S_7(k)\ C_1(k)$ | $S_7(k)\ C_2(k)$ | $S_7(k)\ C_3(k)$ | $S_7(k)\ C_4(k)$ |
| $S_8(k)\ C_1(k)$ | $S_8(k)\ C_2(k)$ | $S_8(k)\ C_3(k)$ | $S_8(k)\ C_4(k)$ |

Time

**FIG. 10**

**FIG. 11**

FIG. 12

FIG. 13

ChD; 6x8; CSD800ns; MCS7

FIG. 14

EP 3 262 767 B1

1500

1510

DEVICE

1514

RADIO UNIT

1516

ANTENNA(S)

1518

MULTI-MODE
COMMUNICATION
PROCESSING UNIT

1520

I/O INTERFACE(S)

1522

DEDICATED
FUNCTIONALITY UNIT

1542

624

PROCESSOR(S)

1526

COMMUNICATION
UNIT

1530

MEMORY

1535

DEDICATED
FUNCTIONALITY
STORAGE

1536

CSD
CONFIGURATION
SPECIFICATION

1538

CSD
CONFIGURATION
INFO.

**FIG. 15**

1600

1514

RADIO UNIT

1516

ANTENNA(S)

1604

TRANSMITTER(S)

RECEIVER(S)

1608

MUX/DEMUX UNIT

1614    1612

CODER/
DECODER
UNIT

1616

MOD/DEMOD UNIT

**FIG. 16**

**FIG. 17**

—1800

—1810

COMMMUNICATION DEVICE  —1820

PHY

—1830

MAC

—1840

PROCESSING

—1850

MEMORY

## FIG. 18

1900

1910

RECEIVE AN INDICATION TO TRANSMIT A SIGNAL
CONCURRENTLY WITH AT LEAST ONE SECOND
COMMUNICATION DEVICE

1920

DETERMINE A CYCLIC SHIFT DIVERSITY (CSD)
VALUE TO FORM THE SIGNAL

1930

GENERATE THE SIGNAL

1940

TRANSMIT THE SIGNAL

**FIG. 19**

~2000

2010 — DETERMINE A CHANNEL RESPONSE ASSOCIATED WITH A COMMUNICATION DEVICE BASED AT LEAST IN PART ON INFORMATION RECEIVED FROM THE COMMUNICATION DEVICE

2020 — DETERMINE A CARRIER FREQUENCY OFFSET (CFO) ASSOCIATED WITH THE COMMUNICATION DEVICE BASED AT LEAST IN PART ON THE CHANNEL RESPONSE

2030 — DETERMINE A PHASE DIFFERENCE BETWEEN THE COMMUNICATION DEVICE AND ANOTHER COMMUNICATION DEVICE BASED AT LEAST IN PART ON THE CFO

2040 — MODIFY THE CHANNEL RESPONSE BASED AT LEAST IN PART ON A PHASE SHIFT APPLIED TO AT LEAST A PORTION OF A LONG TRAINING FIELD SEQUENCE OF THE CHANNEL RESPONSE

2050 — TRANSMIT A RESULTING MODIFIED CHANNEL RESPONSE

**FIG. 20**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150023335 A

- US 20120177019 A